# EUROPÄISCHE PATENTSCHRIFT

(11) **EP 2 781 296 B1**
(45) Veröffentlichungstag und Bekanntmachung des Hinweises auf die Patenterteilung: **21.10.2020**
(21) Anmeldenummer: 13160420.9
(22) Anmeldetag: 21.03.2013
(51) Int. Cl.: B23K 26/38, B23K 26/40, C03B 33/02, C03B 33/09, C03B 33/10

(54) **VORRICHTUNG UND VERFAHREN ZUM AUSSCHNEIDEN VON KONTUREN AUS FLÄCHIGEN SUBSTRATEN MITTELS LASER**
DEVICE AND METHOD FOR CUTTING OUT CONTOURS FROM FLAT SUBSTRATES USING A LASER
DISPOSITIF ET PROCÉDÉ DE DÉCOUPE DE CONTOURS À PARTIR DE SUBSTRATS PLATS AU MOYEN D'UN LASER

(43) Veröffentlichungstag der Anmeldung: 24.09.2014
(73) Patentinhaber: Corning Laser Technologies GmbH, 82152 Krailling (DE)
(72) Erfinder: Boehme, Rico, 09306 Rochlitz (DE)
(74) Vertreter: Pfenning, Meinig & Partner mbB

(56) Entgegenhaltungen:
- WO-A2-2012/006736
- US-A1- 2002 046 997
- US-A1- 2004 144 231
- US-A1- 2010 089 882
- US-A1- 2010 252 540
- US-B2- 6 992 026

## Beschreibung

Die vorliegende Erfindung bezieht sich auf eine Vorrichtung und auf ein Verfahren zum Ausschneiden von Konturen aus flächigen Substraten (insbesondere: Glassubstraten oder Kristallsubstraten) mittels Laser.

Die US 6,992,026 B2 beschreibt ein Laserstrahl-Bearbeitungsverfahren und eine Laserstrahl-Bearbeitungsmaschine im Sinne der Präambel von Anspruch 1 und 15, mit denen ein Werkstück ohne Erzeugen unerwünschter Brüche entlang einer vorbestimmten Schneidelinie bearbeitet werden kann. Dabei wird ein gepulster Laserstrahl verwendet.

Die US 2010/0252540 A1 beschreibt ein Laserbearbeitungsverfahren, mit dem Glas entlang eines vorbestimmten Pfades bearbeitet (geschnitten) werden kann. Dabei wird ein gepulster Laser eingesetzt.

Die US 2010/0089882 A1 beschreibt ein Laserbearbeitungsverfahren, das insbesondere zum Bearbeiten von zerbrechlichen Materialien eingesetzt werden kann. Dabei wird mit einem ersten Laserstrahl eine Vorerwärmung erzeugt und mit einem anderen Laserstrahl wird der vorerwärmte Bereich hinsichtlich der Temperatur konstant gehalten.

Die US 2002/0046997 A1 beschreibt ein Laserbearbeitungsverfahren zum Schneiden eines nicht-metallischen Substrats. Dabei wird ein erster Laserstrahl entlang einer Schnittlinie gefahren, um das Material entlang der Schnittlinie zu erhitzen. Es wird ein zweiter Laserstrahl in vorbestimmtem Abstand nach dem ersten Laserstrahl über die Schnittlinie geführt.

Die DE 10 201100768 A1 beschreibt, wie mit Hilfe eines Lasers Halbleiterwafer, Glaselemente und andere Substrate in verschiedene Teile aufgetrennt werden können, indem die Wellenlänge des Lasers vom Material stark absorbiert wird. Hierdurch erfolgt ein Materialabtrag, der schließlich zum Auftrennen des Substrats in mehrere Teile führt. Dieses Verfahren hat jedoch bei vielen Materialien Nachteile wie beispielsweise Verunreinigungen durch Partikelbildung bei der Ablation oder Schnittkanten, die unerwünschte Mikrorisse oder Schmelzränder aufweisen, sodass ein Schnittspalt, der über die Dicke des Materials nicht gleichförmig ist, entsteht. Da zudem Material verdampft oder verflüssigt werden muss, muss eine hohe mittlere Laserleistung bereitgestellt werden.

Ausgehend vom Stand der Technik ist es daher die Aufgabe der vorliegenden Erfindung, ein Verfahren (sowie eine entsprechende Vorrichtung) zur Verfügung zu stellen, mit dem flächige Substrate insbesondere aus spröden Materialien mit minimaler Rissbildung an Rändern, mit möglichst geraden Schnittkanten, mit hoher Prozessgeschwindigkeit so bearbeitet werden können, dass aus diesen Substraten Konturen herausgearbeitet (und schließlich abgetrennt) werden können, ohne dass es zu unerwünschten, in der Substratebene verlaufenden Rissen, Abplatzungen oder anderen Zerstörungen im nach dem Abtrennen der Konturen verbleibenden Substrat kommt. Ziel der vorliegenden Erfindung ist somit das exakte, saubere Abtrennen einer Kontur von einem Substrat, insbesondere das saubere, exakte Heraustrennen von Innenkonturen aus dem Substrat.

Wie nachfolgend noch im Detail beschrieben wird, wird in der Regel mit einem gepulsten Laser mit einer Wellenlänge gearbeitet, für die das Substratmaterial im Wesentlichen transparent ist. Grundsätzlich ist jedoch auch der Einsatz eines Dauerstrichlasers möglich, sofern der Laserstrahl bei seinem Führen über die Substratoberfläche (z.B. mittels eines optischen Modulators) schnell an- und wieder abgeschaltet werden kann um hintereinander liegenden Zonen innerer Schädigung zu erzeugen (siehe nachfolgend).

Die erfindungsgemäße Aufgabe wird durch ein Verfahren nach Anspruch 1 sowie durch eine Vorrichtung nach Anspruch 15 gelöst, wobei vorteilhafte Varianten in den abhängigen Ansprüchen beschrieben werden.

Nachfolgend wird die Erfindung zunächst allgemein, dann anhand von Ausführungsbeispielen beschrieben.

Die wesentlichen Merkmale des erfindungsgemäßen Verfahrens sind in Anspruch 1 beschrieben. Dabei wird die Kontur als zweidimensionale Fläche in der Substratebene in Form einer Teilfläche des Substrats verstanden. Die dieser Teilfläche entsprechenden Abschnitte des Substrats sollen aus dem Substrat entfernt werden wobei die übrigbleibenden Abschnitte des Substrats in nachfolgenden Prozessen weiterverarbeitet werden sollen. Anders ausgedrückt: Die vom Substrat abzutrennende Kontur bildet eine unerwünschte Fläche, die auch zerstört werden kann, die übrig bleibenden Substratabschnitte sollen den Abtrennprozess der Kontur ohne innere Beschädigungen sowie mit möglichst idealen Schnittkanten gemäß der Konturlinie überstehen. Dies wird erreicht. Nachfolgend wird/werden dabei unter dem Substrat sowohl das noch unbearbeitete Substrat vor Abtrennen der Kontur als auch die übrigbleibenden Substratreste nach dem Abtrennen der Kontur verstanden. Der Fachmann weiß jeweils aus dem Zusammenhang was gemeint ist.

Der Konturdefinitionsschritt erfolgt so, dass nach seiner Durchführung der Konturverlauf der Kontur ins Substratmaterial eingeschrieben ist, die Kontur jedoch noch mit dem Substrat verbunden ist, sodass noch keine vollständige Trennung der Kontur vom Substrat erfolgt ist: Die schrittweise vollständige Abtrennung der unerwünschten Kontur vom Substrat erfolgt durch den Konturdefinitionsschritt, den optionalen Rissdefinitionsschritt, den optionalen Spannungsentlastungsschritt, und den Materialabtrags- und optional zusätzlichen Materialverformschritt und, sofern noch notwendig (also falls die Konturreste nicht bereits nach Durchführen der Schritte (a) bis (d) durch Eigenspannungen im Material selbstständig abfallen), durch einen optionalen Nachbehandlungsschritt. Auch die Einbringung der einzelnen Zonen innerer Schädigung im optionalen Rissdefinitionsschritt (vgl. Anspruch 3) und im optionalen Spannungsentlastungsschritt erfolgt so, dass noch keine vollständige Trennung der hierdurch erzeugten Teilabschnitte im Substrat erfolgt.

Die Durchführung des optionalen Rissdefinitionsschritts erfolgt bevorzugt nach Abschluss des Konturdefinitionsschrittes, dies ist jedoch nicht notwendig: So können z.B. auch erst Teilabschnitte der Konturlinie durch Einbringen der Zonen innerer Schädigung erzeugt werden, bevor der Rissdefinitionsschritt zum Einbringen der Risslinienabschnitte durchgeführt wird und nach Abschluss desselben die restlichen Konturlinienabschnitte des Konturdefintionsschritts ins Substratmaterial eingebracht werden.

Unter dem Begriff eines von der Konturlinie unter einem Winkel α > 0° wegführenden Risslinienabschnitts wird verstanden, dass der Winkel α zwischen der lokalen Tangente an die Konturlinie an demjenigen Ort, wo besagter (ggf. zur Konturlinie hin fortgesetzter) Risslinienabschnitt von der Konturlinie wegführt, und der lokalen Tangente an demjenigen Ende des Risslinienabschnitts, das der Konturlinie zugewandt ist, größer als 0° ist.

Die Laserbestrahlung in den Schritten (a), (b) und (d) (also im Konturdefinitionsschritt, im Rissdefinitionsschritt und im Spannungsentlastungsschrittnachfolgend werden alternativ auch diese Bezeichnungen (a) bis (d) für diese Schritte verwendet) muss nicht senkrecht zur Substratebene erfolgen, d.h. die einzelnen Zonen innerer Schädigung müssen nicht senkrecht zur Substratebene verlaufen (und auch nicht unbedingt die gesamte Substratdicke senkrecht zur Substratebene durchziehen). Die Lasereinstrahlung kann auch unter einem Winkel > 0° (beispielsweise zwischen 0° und 20°) zur Substratnormalen erfolgen (schräges Einbringen der Zonen innerer Schädigung).

Unter den bevorzugt bearbeiteten (d.h. einzubringenden und herauszulösenden) Innenkonturen werden mathematisch gesprochen einfach zusammenhängende Mengen des zweidimensionalen Raumes (Ebene des Substrats) bzw. entsprechende Teilabschnitte im Substrat verstanden. Die herauszutrennenden Innenkonturen können dabei nahezu beliebige Formen aufweisen. Insbesondere sind Kreisformen, Ellipsenformen, Kissenformen, Langlochformen (mit abgerundeten Ecken) usw. für die Innenkonturen möglich, indem der Laserstrahl auf der Substratoberfläche entlang einer entsprechend geformten Konturlinie bewegt wird. Bevorzugt ist das Substrat dabei ortsfest im Weltkoordinatensystem angeordnet und der Laserstrahl wird mit einer geeigneten strahlführenden optischen Einheit (die beispielsweise ein F-Theta-Objektiv gefolgt von einem Galvanometerscanner aufweisen kann) über die Substratoberfläche bewegt. Alternativ ist auch eine relativ zum Weltkoordinatensystem feststehende Strahlführungsoptik möglich, wobei dann relativ zur Strahlführungsoptik und zum Laserstrahl das Substrat im Weltkoordinatensystem bewegt werden muss.

Unter der Substratdicke wird nachfolgend die Ausdehnung des Substrats senkrecht zur Substratebene, also zwischen Substratvorderseite und der Substratrückseite verstanden. Die Substratvorderseite ist dabei diejenige Oberfläche des Substrats, die dem eingestrahlten Laserlicht zugewandt ist.

Erste vorzugsweise realisierte Merkmale des erfindungsgemäßen Verfahrens (Materialabtragung zum Einbringen einer Abtraglinie) lassen sich Anspruch 2 entnehmen.

Diese Materialabtragung ist insbesondere auf große und kleine Radien von abzutrennenden Innenkonturen anwendbar und besonders für kleinere Konturen wie z.B. Kreisausschnitte mit Durchmesser < 2.5 mm und für Langlöcher geeignet.

Zum Materialabtrag kann ein CO₂-Laser mit einem Strahldurchmesser beim Auftreffen auf das Substrat (durch Fokussierung erreicht) von im Bereich zwischen ca. 0.05 mm und 0.5 mm verwendet werden. Der CO₂-Laser kann gepulst oder kontinuierlich angewendet werden. Bevorzugt werden Pulse im Bereich 100 µs bis 4000 µs verwendet bei Pulsfolgefrequenzen von 0.1 kHz bis 100 kHz. Besonders bevorzugt liegt die Pulsdauer im Bereich zwischen 300 µs und 4000 µs bei 0.1 kHz bis 3 kHz Pulsfolgefrequenz. Die Laserleistung kann im Bereich von 10 bis 200 W, bevorzugt aber im Bereich von 10 bis 100 W, liegen.

Der Verfahrweg des Laserstrahls ist längs der Konturlinie, beabstandet von dieser und in der abzutrennenden Kontur, beispielsweise also auf einer zur Targetkontur symmetrischen (parallelen) Bahn. Beispielsweise bei einer herauszutrennenden kreisförmigen Kontur (Lochausschnitt) eine Kreisbewegung. Der Verfahrweg kann entweder einmal oder mit mehrfacher Wiederholung ausgeführt werden.

Durch den geringen Fokusdurchmesser und die hohen Laserleistungen wird Substratmaterial vorrangig geschmolzen (Materialabtrag). Zusammen mit Laserpulsen im oberen Mikrosekundenbereich kann so die gesamte Substratmaterialdicke (z.B. 0.7mm) mit einem Puls komplett durchgewärmt werden.

Unterstützt werden kann der Materialabtragsschritt durch den Einsatz einer Gasdüse mit Prozessgas (z.B. CDA). Bei z.B. einem Düsendurchmesser von 2 mm und Gasdrücken von 1.5 bis 4 bar lässt sich besonders gut ein Materialabtrag auch für kleine Konturen und Radien herstellen. Durch den Gasfluss wird das durch den Laser aufgeschmolzene Material in Strahlrichtung ausgetrieben.

Mit den oben beschrieben Parametern können z.B. auch gehärtete Gläser (DOL 40 µm) einem Materialabtrag zugeführt werden ohne dass es zur schädlichen Rissbildung kommt.

Die Abtragskontur (Abtraglinie) sollte ausreichend weit von der Konturlinie (Target-Konturschnitt) entfernt sein (in der Regel reichen hier, je nach Substratmaterial, Abstände von ca. 0.1 bis 0.3 mm): Beispielsweise bei einer herauszutrennenden kreisförmigen Glasscheibe von 2 mm Durchmesser sollte der Mindestabstand der Abtraglinie von der Konturlinie 0.1 mm betragen (Verformungsdurchmesser bzw. Durchmesser der kreisförmigen Abtragslinie maximal 1.8 mm). Bei einem Glasscheibendurchmesser von 1.5 mm sollte der Verformungsdurchmesser maximal 1.3 mm groß sein. Bei einem Glasscheibendurchmesser von 1.0 mm sollte der Verformungsdurchmesser maximal 0.8 mm groß sein.

Unterstützend für das vollständige Abtrennen der Kontur wirken sich die nachfolgend noch näher beschriebenen Risslinienabschnitte (z. B. V-Schnitte) aus.

Gemäß der vorteilhaften Merkmale des Anspruchs 2 ist statt einer oder additiv zu einer Materialabtragung gemäß Anspruch 1 auch ein Herauslösen von Materialabschnitten der abzutrennenden Kontur durch thermische Verformung möglich.

Dabei kann ein CO₂-Laser bzw. dessen Laserstrahl zum Herauslösen von Substratmaterial in einer Substratmaterial nicht abtragenden Weise, also in Substratmaterial (insbesondere der abzutrennenden Kontur) rein thermisch verformender Weise verwendet werden (dies erfolgt vorzugsweise bei größeren abzutrennenden Konturen, z. B. bei herauszutrennenden Kreisausschnitten mit einem Durchmesser ≥ 2.5 mm, vorzugsweise ≥ 5-10 mm).

Die Vorgehensweise bei einem solchen Materialverformschritt kann wie folgt sein:
Durch CO₂-Laser-Bestrahlung des Substrats werden z. B. durch Bewegen des Laserstrahls längs der Konturlinie, jedoch beabstandet davon sowie in der abzutrennenden Kontur (beispielsweise entlang eines Kreises oder einer Spirale im Zentrum der der abzutrennenden Kontur) zumindest Abschnitte der abzutrennenden Kontur so erwärmt, dass es zu einer plastischen Verformung von zumindest Abschnitten der abzutrennenden Kontur kommt. Der Durchmesser des auf dem Substratmaterial auftreffenden CO₂-Laserspots kann einen weiten Bereich abdecken: 0.1 mm bis 10 mm. Bevorzug ist ein Durchmesser von 0.2 mm bis 3 mm. Der CO₂-Laser kann sowohl gepulst als auch kontinuierlich betrieben werden. Bevorzugt werden aber Pulse im Bereich von 6 µs bis 4000 µs verwendet bei Pulsfolgefrequenzen im Bereich von 0.1kHz bis 100 kHz. Die Laserleistung kann Bereich zwischen 10 und 300 W, bevorzugt im Bereich zwischen 10 und 50 W liegen.

Der Verfahrweg des Lasers ist vorzugsweise eine zur abzutrennenden Kontur (Targetkontur) symmetrische (z. B. parallele, jedoch beabstandete) Bahn. Beispielsweise bei einem Lochausschnitt als abzutrennender Innenkontur eine Kreisbewegung. Aber auch eine Spiralbewegung kann sich günstig auf die thermoplastische Verformung einer solchen inneren Kontur (z. B. Glasscheibe) auswirken. Es kann sich in bestimmten Fällen als günstig erweisen, wenn der Laserstrahl über ein definiertes Zeitintervall von beispielsweise zwischen .... s und 0.5 s einfach im Zentrum der abzutrennenden Kontur stehenbleibt und die abzutrennende Kontur durchwärmt und so verformt. Der Verfahrweg kann entweder einmal oder mit mehrfacher Wiederholung ausgeführt werden, was sich günstig auf die thermoplastische Verformung der abzutrennenden Kontur auswirken kann.

Die plastische Verformung im Zentrum führt zu einem Zusammenziehen der abzutrennenden Kontur (z. B. Glasscheibe) aufgrund eines thermischinduzierten Fließens des Substratmaterials (z. B. Glasmaterial) im bestrahlten Bereich im Zentrum und zum Zentrum. Dies kann z. B. bei einer abzutrennenden Kreisscheibe als Kontur wie folgt aussehen:
- Die Verformung bildet schwerkraftbedingt i.d.R. eine Ausbeulung vom Laser weg in Richtung Erdmittelpunkt aus. Diese Ausbeulung kann u. U. eine Tropfenform annehmen. Vergleichen kann man die Oberflächentopografie mit der einer konvexen Linse.
- Unter bestimmten Laser-Bedingungen bildet sich auch zum Laser hin eine Ausbeulung aus. Die Oberflächentopografie ist dann die einer bikonvexen Linse.
- Unter bestimmten Laser-Bedingungen bildet sich einseitig eine Einbeulung (konkav) und auf der gegenüberliegenden Oberfläche eine Ausbeulung aus.
- Wenn parallel und zeitgleich über eine Gasdüse Prozessgas (technische Luft, CDA) auf die bestrahlte Oberfläche geströmt wird, kann die Bildung der Aus- und/oder Einbeulung sehr präzise gesteuert werden. Dadurch können auch Konturen mit sehr kleine Radien (<2,5mm bis 1,2mm) zum Herauslösen gebracht werden. Bei z. B. einem Düsendurchmesser von 2 mm und Gasdrücken im Bereich von 1.5 bis -3 bar lassen sich besonders gut relativ kleine Konturen herauslösen.

Gemeinsame haben die beschriebenen thermoplastischen Verformungsvarianten, dass Substratmaterial der abzutrennenden Kontur fließt (z. B. bei einer herauszutrennenden Innenkontur zum Zentrum derselben hin fließt) und sich dadurch ein Spalt zum restlichen Substratmaterial (z. B. außen liegendes Material einer herauszutrennenden Innenkontur) bildet. Ein solcher Spalt kann Abmessungen von ca. 10 µm bis 50 µm haben.

Nach einer kurzen thermischen Relaxationszeit (Abkühlen und Zusammenziehen der abzutrennenden Kontur) fällt die abzutrennenden Kontur durch den sich bildenden Spalt allein heraus.

Beim Materialverformschritt wird somit kein Substratmaterial abgetragen, es entstehen keine Abtragsprodukte.

Die CO₂-induzierte thermoplastische Verformung bzw. die vom Laser bestrahlten Bereiche sollte(n) ausreichend weit (in der Regel reichen hier, je nach Substratmaterial, Abstände von ca. 1 bis 3 mm) von der bereits eingebrachten Konturlinie (Konturschnitt) entfernt sein: Beispielsweise bei einer herauszutrennenden Glasscheibe von 10 mm Durchmesser sollte der zentral in dieser Glasscheibe bestrahlte Bereich (Verformungsdurchmesser) maximal einen Durchmesser von 8 mm aufweisen. Bei einem Glasscheibendurchmesser von 5 mm sollte dieser Bereich maximal 3.4 mm groß sein. Bei einem Glasscheibendurchmesser von 2.5 mm sollte dieser Bereich maximal 1.5 mm groß sein.

Die bereits eingebrachte Konturlinie (Target-Konturschnitt) bildet eine ausreichende thermische Isolation zum umliegenden Material des restlichen, verbleibenden Substrats, so dass bei geeignetem thermoplastischen Verformungsdurchmesser keine nachteilige thermische Beeinflussung des Schnittrandes bzw. des umliegenden Materials in Form von Chipping oder parasitärer Rissbildung erfolgen kann.

In den nachfolgenden Ausführungsbeispielen wird die Realisierung des Materialabtrags- und/oder Materialverformschrittes als Materialabtragsschritt mittels eines materialabtragenden Laserstrahls noch näher dargestellt.

Die Ultraschallbehandlung kann wie folgt erfolgen: Frequenzbereich zwischen 1 kHz und 50 kHz (besonders bevorzugt: 5kHz - 40kHz). Dabei wird bevorzugt die Fläche im Inneren der Schnittkontur (also in der abzutrennenden Kontur) mit einem Ultraschall-Aktor kontaktiert. Die Kontaktfläche kann dabei den Abmessungen und der Form einer herauszutrennenden Innenkontur entsprechen. Der Kontakt kann vollflächig oder als Ring ausgeführt sein. In einer besonderen Ausführung können auch außerhalb der abzutrennenden Kontur liegende Substratbereiche mit Ultraschall behandelt werden (auch eine gleichzeitige Ultraschallbehandlung der abzutrennenden Kontur und solcher Restsubstratbereiche ist möglich).

Ein entsprechender Nachbehandlungsschritt ist jedoch häufig gar nicht notwendig, da die im Schritt (b) (und im ggf. durchgeführten optionalen Schritt (d)) eingebrachten Zonen innerer Schädigung bereits innere Spannungen in das Substratmaterial eingebracht haben, die ausreichen, dass sich die unerwünschten Konturreste im Verlauf des Materialabtrags- und/oder Materialverformschritts oder nach demselben von alleine vom übrigbleibenden Substrat lösen (Selbstentfernung der Konturreste).

Alle der bereits beschriebenen vorteilhaften Merkmale und der nachfolgend noch beschriebenen vorteilhaften Merkmale lassen sich dabei im Rahmen der Erfindung jeweils einzeln oder auch in beliebigen Kombinationen miteinander realisieren.

Das im Anspruch 7 beschriebene punktförmige Fokussieren kann dabei wie in US 6,992,026 B2 oder in WO 2012/006736 A2 beschrieben durchgeführt werden.

Besonders bevorzugt ist es jedoch, die einzelnen Zonen innerer Schädigung entlang der Konturlinie, der Risslinienabschnitte und ggf. auch der Entlastungslinienabschnitte vermittels der im Anspruch 7 beschriebenen Laserstrahlbrennlinie (also durch induzierte Absorption im Substratmaterial entlang eines ausgedehnten Abschnitts in Dickenrichtung des Materials) einzubringen.

Diese bevorzugte Ausführungsform der Schritte (a), (b) und (d) wird nun nachfolgend ausführlich beschrieben.

Wesentlich ist dabei zunächst, dass die Wellenlänge des einstrahlenden Lasers in Abstimmung mit dem zu bearbeitenden Substrat so gewählt wird, dass das Substratmaterial für diese Laserwellenlänge im wesentlichen transparent ist.

Das Verfahren für die Schritte (a), (b) und (d) erzeugt pro Laserpuls eine Laser-Brennlinie (im Unterschied zu einem Brennpunkt) mittels einer dazu geeigneten Laseroptik (nachfolgend alternativ auch als strahlführende optische Einheit oder optische Anordnung bezeichnet). Die Brennlinie bestimmt die Zone der Wechselwirkung zwischen Laser und Material des Substrats. Fällt die Brennlinie in das zu trennende Material, so können die Laserparameter so gewählt werden, dass eine Wechselwirkung mit dem Material stattfindet, die eine Risszone entlang der Brennline erzeugt. Wichtige Laserparameter sind hier die Wellenlänge des Lasers, die Impulsdauer des Lasers, die Pulsenergie des Lasers und ggf. auch die Polarisation des Lasers.

Für die Wechselwirkung des Laserlichts mit dem Material in den Schritten (a), (b) und (d) sollte bevorzugt folgendes gegeben sein:
1) Die Wellenlänge 1 des Lasers ist bevorzugt so gewählt, dass das Material im wesentlichen transparent bei dieser Wellenlänge ist (konkret z.B.: Absorption <<10% pro mm Materialtiefe => γ<<1/cm; γ: Lambert-Beer'scher Absorptionskoeffizient).
2) Die Impulsdauer des Lasers ist bevorzugt so gewählt, dass innerhalb der Wechselwirkungszeit kein wesentlicher Wärmetransport (Wärmediffusion) aus der Wechselwirkungszone heraus stattfinden kann (konkret z.B.: τ << d²/α, d: Fokusdurchmesser, τ Laserimpulsdauer, α: Wärmediffusionskonstante des Materials).
3) Die Pulsenergie des Lasers ist bevorzugt so gewählt, dass die Intensität in der Wechselwirkungszone, also in der Brennlinie eine induzierte Absorption erzeugt, welche zu einer lokalen Erwärmung des Materials entlang der Brennlinie führt, welche wiederum zu einer Rissbildung entlang der Brennlinie infolge des in das Material eingebrachten thermischen Stresses führt.
4) Die Polarisation des Lasers beeinflusst sowohl die Wechselwirkung an der Oberfläche (Reflektivität), als auch die Art der Wechselwirkung innerhalb des Materials bei der induzierten Absorption. Die induzierte Absorption kann über induzierte, freie Ladungsträger (typischerweise Elektronen) stattfinden, entweder nach thermischer Anregung, oder über Multiphoton-Absorption und innere Photoionisation, oder über direkte Feldionisation (Feldstärke des Lichtes bricht Elektronenbindung direkt). Die Art der Erzeugung der Ladungsträger kann z.B. über den sog. Keldysh-Parameter (Referenz) beurteilt werden, das spielt aber für die Anwendung der Methode keine Rolle. Wichtig kann bei bestimmten (z.B. doppelbrechenden Materialien) nur sein, dass die weitere Absorption/Transmission des Laserlichtes von der Polarisation abhängt, und somit die Polarisation über geeignete Optiken (Phasenplatten) vom Anwender für das Trennen des jeweiligen Materials günstig gewählt werden sollte, z.B. einfach in heuristischer Weise. Ist also das Substratmaterial nicht optisch isotrop, sondern z.B. doppelbrechend, so wird auch die Propagation des Laserlichts im Material durch die Polarisation beeinflusst. So kann die Polarisation und die Orientierung des Polarisationsvektors so gewählt werden, dass sich wie gewünscht nur eine Brennlinie und nicht deren zwei ausbilden (ordentliche und außerordentliche Strahlen). Bei optisch isotropen Materialien spielt dies keine Rolle.
5) Weiterhin sollte die Intensität über die Impulsdauer, die Pulsenergie und den Brennliniendurchmesser so gewählt sein, dass keine Ablation oder Aufschmelzung, sondern nur eine Rissbildung im Gefüge des Festkörpers erfolgt. Diese Anforderung ist für typische Materialien wie Glas oder transparente Kristalle am leichtesten zu erfüllen mit gepulsten Lasern im Sub-Nanosekunden-Bereich, insbesondere also mit Pulsdauern von z.B. zwischen 10 und 100 ps. Über Skalenlängen von etwa einem Mikrometer (0.5 bis 5.0 Mikrometer) wirkt für schlechte Wärmeleiter wie beispielsweise Gläser die Wärmeleitung bis in den Sub-Mikrosekundenbereich, während für gute Wärmeleiter wie Kristalle und Halbleiter die Wärmeleitung schon ab Nanosekunden wirksam wird.

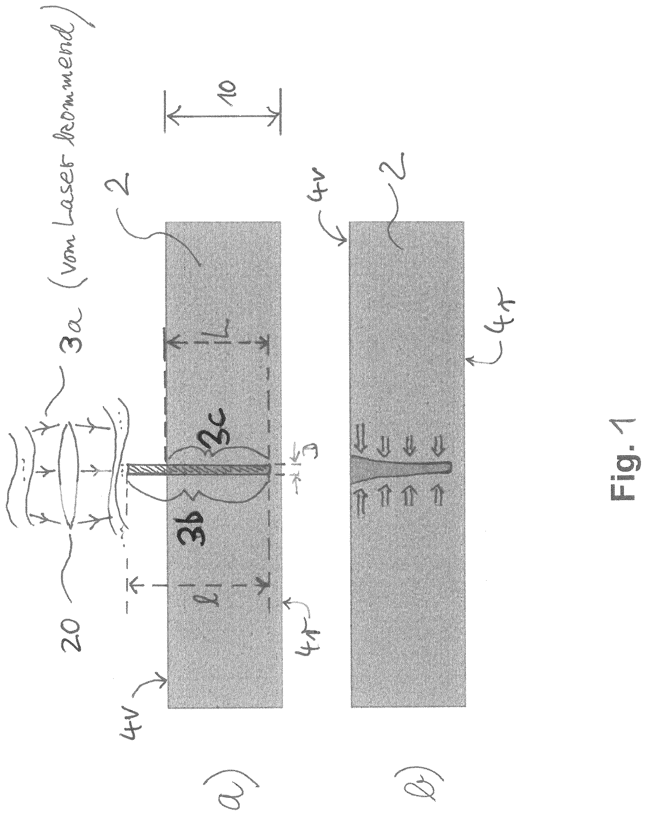

Der wesentliche Prozess zur Ausbildung der Zonen innerer Schädigung, also der vertikal zur Substratebene ausgedehnten Rissbildung im Material ist mechanischer Stress, der die Gefügefestigkeit des Materials übersteigt (Druckfestigkeit in MPa). Der mechanische Stress wird hier über schnelle, inhomogene Erwärmung (thermisch induzierter Stress) durch die Laserenergie erreicht. Die Rissbildung in den Schritten (a), (b) und (d) startet, eine entsprechende Positionierung des Substrats relativ zur Brennlinie vorausgesetzt (siehe nachfolgend), natürlicherweise an der Oberfläche des Substrats, da dort die Verformung am höchsten ist. Das liegt daran, dass im Halbraum über der Oberfläche kein Material ist, welches Kräfte aufnehmen kann. Dieses Argument gilt auch für Materialien mit gehärteten oder vorgespannten Oberflächen, solange die Dicke der gehärteten oder vorgespannten Schicht groß ist gegenüber dem Durchmesser des schlagartig erhitzten Materials entlang der Brennlinie. (Siehe hierzu auch die nachfolgend noch beschriebene Figur 1.)

Die Art der Wechselwirkung kann über die Fluenz (Energiedichte in Joule pro cm²) und die Laserimpulsdauer bei gewähltem Brennliniendurchmesser so eingestellt werden, dass 1.) keine Schmelze an der Oberfläche oder im Volumen und 2.) keine Ablation mit Partikelbildung an der Oberfläche stattfindet.

Nachfolgend wird die Erzeugung der Konturlinie einer gewünschten Trennfläche (Relativbewegung zwischen Laserstrahl und Substrat entlang der Konturlinie auf der Substratoberfläche), also der Schritt (a) beschrieben. Entsprechendes gilt für (b) und (d).

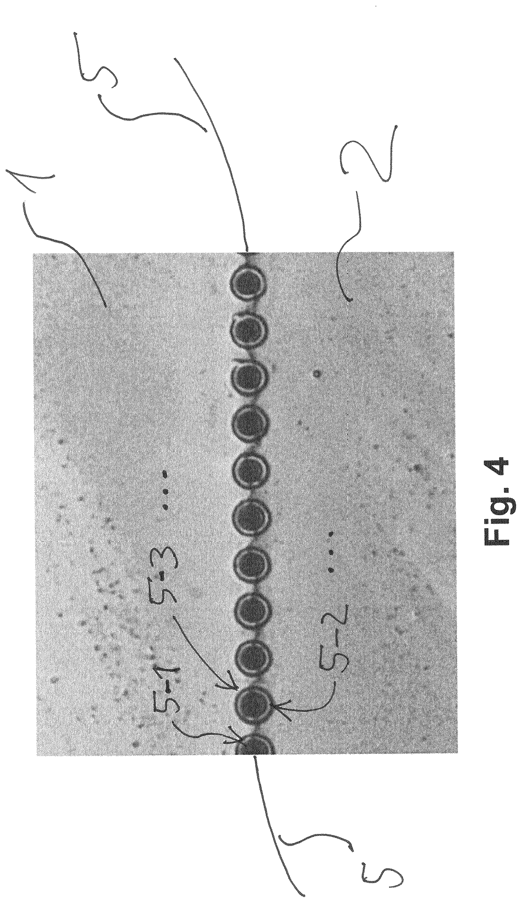

Die Wechselwirkung mit dem Material erzeugt pro Laserpuls eine einzelne, durchgehende (in Richtung senkrecht zur Substratoberfläche gesehen) Risszone im Material entlang einer Brennlinie. Für das vollständige Durchtrennen des Materials wird eine Abfolge dieser Risszonen pro Laserpuls so eng aneinander entlang der gewünschten Trennlinie gesetzt, dass sich eine laterale Verbindung der Risse zu einer gewünschten Rissfläche/Kontur im Material ergibt. Dafür wird der Laser mit einer bestimmten Folgefrequenz gepulst. Spotgröße und Abstand sind so gewählt, dass an der Oberfläche entlang der Line der Laserspots eine gewünschte, gerichtete Rissbildung einsetzt. Der Abstand der einzelnen Risszonen entlang der gewünschten Trennfläche ergibt sich aus der Bewegung der Brennlinie relativ zum Material innerhalb der Zeitspanne von Laserpuls zu Laserpuls. Siehe hierzu auch die nachfolgend noch beschriebene Fig. 4.

Zur Erzeugung der gewünschten Konturlinie bzw. Trennfläche im Material kann entweder das gepulste Laserlicht mit einer parallel zur Substratebene (und ggf. auch senkrecht dazu) beweglichen optischen Anordnung über das stationäre Material bewegt werden, oder das Material selbst wird mit einer beweglichen Aufnahme an der stationären optischen Anordnung so vorbei bewegt, dass die gewünschte Trennline ausgeformt wird. Die Orientierung der Brennlinie zur Oberfläche des Materials, ob senkrecht oder unter einem Winkel > 0° zur Oberflächennormalen, kann entweder fest gewählt sein, oder über eine drehbare optische normale Anordnung (nachfolgend vereinfacht auch als Optik bezeichnet) und/oder einen drehbaren Strahlweg des Lasers entlang der gewünschten Konturlinie bzw. Trennfläche oder-linie geändert werden.

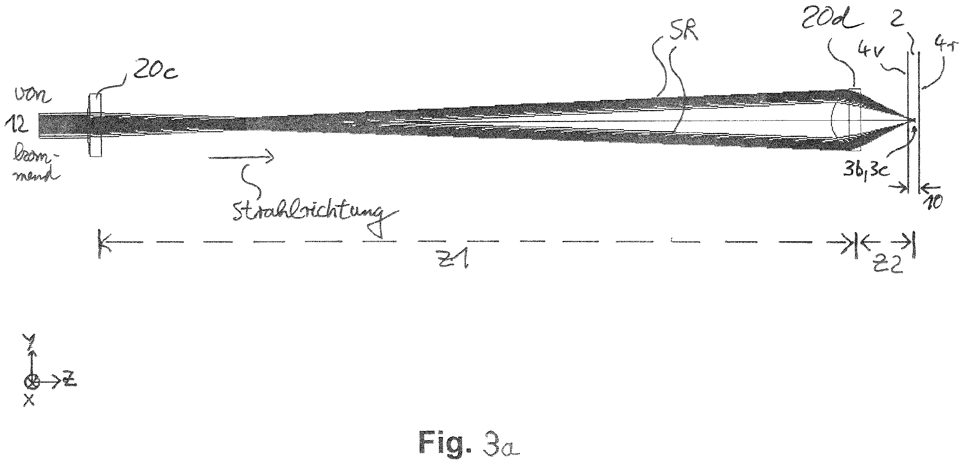

Insgesamt kann die Brennlinie zur Ausformung der gewünschten Trennlinie in bis zu fünf getrennt beweglichen Achsen durch das Material geführt werden: zwei Raumachsen (x,y), die den Einstechpunkt der Brennlinie in das Material festlegen, zwei Winkelachsen (theta, phi), die die Orientierung der Brennlinie vom Einstechpunkt in das Material hinein festlegen, und eine weitere Raumachse (z', nicht unbedingt orthogonal zu x, y), welche festlegt, wie tief die Brennlinie vom Einstechpunkt an der Oberfläche in das Material hineinreicht. Zur Geometrie im kartesischen Koordinatensystem (x,y,z) siehe auch z.B. die nachfolgend beschriebene Figur 3a. Im Falle des senkrechten Einfalls des Laserstrahls auf die Substratoberfläche gilt z=z'.

Die endgültige Separation des Materials (Abtrennen der Kontur) entlang der erzeugten Konturlinie erfolgt entweder durch Eigenspannung des Materials, oder durch eingebrachte Kräfte, z.B. mechanisch (Zug) oder thermisch (ungleichförmige Erwärmung/Abkühlung). Da in den Schritten (a), (b) und (d) kein Material ablatiert wird, gibt es in der Regel zunächst keinen durchgehenden Spalt im Material, sondern nur eine hoch gestörte Bruchfläche (Mikrorisse), die in sich verzahnt und u.U. noch durch Brücken verbunden ist. Durch die nachfolgend im Nachbehandlungsschritt eingebrachten Kräfte werden über laterales (parallel zur Substratebene erfolgendes) Risswachstum die verbliebenen Brücken getrennt und die Verzahnung überwunden, sodass sich das Material entlang der Trennfläche separieren lässt.

Die in den Schritten (a), (b) und (d) verwendbare Laserstrahlbrennlinie wird vorangehend und nachfolgend alternativ vereinfacht auch als Brennlinie des Laserstrahls bezeichnet. In (a), (b) und (d) wird das Substrat durch die Rissbildung (induzierte Absorption entlang der senkrecht zur Substratebene ausgedehnten Brennlinie) mit der Konturlinie, den Risslinienabschnitten und dem/den Entlastungslinienabschnitt(en) zur Abtrennung der Kontur vom Substrat vorbereitet. Die Rissbildung erfolgt bevorzugt senkrecht zur Substratebene in das Substrat bzw. in das Innere des Substrats hinein (Längsrissbildung). Wie bereits beschrieben, müssen in der Regel eine Vielzahl einzelner Laserstrahlbrennlinien entlang einer Linie (z.B. Konturlinie) auf der Substratoberfläche in das Substrat eingebracht werden, damit die einzelnen Teile des Substrats voneinander separiert werden können. Hierzu kann entweder das Substrat parallel zur Substratebene relativ zum Laserstrahl bzw. zur optischen Anordnung verfahren werden oder umgekehrt die optische Anordnung parallel zur Substratebene relativ zum ortsfest angeordneten Substrat bewegt werden.

Die induzierte Absorption der Schritte (a), (b) und (d) wird vorteilhaferweise so erzeugt, dass die Rissbildung im Substratgefüge ohne Ablation und ohne Aufschmelzen von Substratmaterial erfolgt. Dies geschieht mittels der Einstellung der bereits beschriebenen, nachfolgend noch im Rahmen von Beispielen erläuterten Laserparameter sowie der Merkmale und Parameter der optischen Anordnung. Dabei kann die Ausdehnung I der Laserstrahlbrennlinie und/oder die Ausdehnung des Abschnitts der induzierten Absorption im Substratmaterial (im Substratinneren) jeweils in Strahllängsrichtung gesehen zwischen 0.1 mm, bevorzugt zwischen 0.3 mm und 10 mm, betragen. Die Schichtdicke des Substrats beträgt vorzugsweise zwischen 30 und 3000 µm, besonders bevorzugt zwischen 100 und 1000 µm. Das Verhältnis l/d aus dieser Ausdehnung l der Laserstrahlbrennlinie und der Schichtdicke d des Substrats beträgt bevorzugt zwischen 10 und 0.5, besonders bevorzugt zwischen 5 und 2. Das Verhältnis L/D aus der Ausdehnung L des Abschnitts der induzierten Absorption im Substratmaterial in Strahllängsrichtung gesehen und der mittleren Ausdehnung D des Abschnitts des induzierten Absorption im Material, also im Inneren des Substrats, beträgt bevorzugt quer zur Strahllängsrichtung gesehen zwischen 5 und 5000, besonders bevorzugt zwischen 50 und 5000. Der mittlere Durchmesser δ (Spotdurchmesser) der Laserstrahlbrennlinie liegt vorzugweise zwischen 0.5 µm und 5 µm, besonders bevorzugt zwischen 1 µm und 3 µm (z.B. bei 2 µm). Die Impulsdauer des Lasers sollte so gewählt werden, dass innerhalb der Wechselwirkungszeit mit dem Substratmaterial die Wärmediffusion in diesem Material vernachlässigbar ist (bevorzugt keine Wärmediffusion erfolgt). Wird die Impulsdauer des Lasers mit τ bezeichnet, so gilt bevorzugt für τ, δ und die Wärmediffusionskonstante β des Materials des Substrats τ << δ²/β. Dies bedeutet, dass τ weniger als 1 %, bevorzugt weniger als 1 %o von δ²/β beträgt. Beispielsweise kann die Impulsdauer τ bei 10 ps (oder auch darunter), zwischen 10 und 100 ps oder auch über 100 ps betragen. Die Pulswiederholfrequenz des Lasers liegt vorzugweise zwischen 10 und 1000 kHz, bevorzugt bei 100 kHz. Der Laser kann dabei als Einzelpulslaser oder als Burstimpulslaser betrieben werden. Die mittlere Laserleistung (gemessen strahlausgangsseitig des Lasers) beträgt vorzugsweise zwischen 10 Watt und 100 Watt, bevorzugt zwischen 30 Watt und 50 Watt für die Schritte (a), (b) und (d).

In den Schritten (a), (b) und (d) wird somit ein Laserstrahl relativ zur Substratoberfläche entlang einer Linie bewegt, entlang derer in das Substrat eine Vielzahl einzelner Zonen innerer Schädigung einzubringen ist (auch als ausgedehnte Abschnitte induzierte Absorption im Inneren des Substrats entlang der jeweiligen Linie bezeichnet). Das Verhältnis a/δ aus dem mittleren Abstand a der Zentren unmittelbar benachbarter, also direkt nacheinander erzeugter Zonen innerer Schädigung (Abschnitte induzierter Absorption) und dem mittleren Durchmesser δ der Laserstrahlbrennlinie (Spotdurchmesser) beträgt bevorzugt zwischen 0.5 und 3.0, bevorzugt zwischen 1.0 und 2.0 (siehe hierzu auch Fig. 4).

Die endgültige Separation bzw. Abtrennung der Kontur vom Substrat kann dadurch erfolgen, dass nach den Schritten (a) bis (d) (ggf. auch bereits während der Durchführung eines dieser Schritte) mechanische Kräfte auf das Substrat ausgeübt werden (beispielsweise mittels eines mechanischen Stempels) und/oder thermische Spannungen in das Substrat eingebracht werden (beispielsweise mittels eines CO₂-Lasers), um das Substrat ungleichförmig zu erwärmen und wieder abzukühlen. Hierdurch kann zwischen unmittelbar benachbarten ausgedehnten Abschnitten induzierter Absorption bzw. zwischen unmittelbar benachbarten Zonen innerer Schädigung eine Rissbildung zum Auftrennen des Substrats in mehrere Teile, also zum Abtrennen der Kontur bewirkt werden. Diese Rissbildung ist dabei (im Gegensatz zu der in Richtung der Substrattiefe bzw. der in den Schritten (a), (b) und (d) induzierten Tiefenrissbildung) als Querrissbildung, also als eine laterale Rissbildung in der Substratebene zu verstehen (entsprechend des Verlaufs der Konturlinie, entlang derer die Kontur vom Substrat abzutrennen ist).

Wesentlich bei diesem bevorzugten Vorgehen in den Schritten (a), (b) und (d) ist dabei, dass pro Laserpuls (oder pro Burstimpuls) eine Laserstrahlbrennlinie (und nicht lediglich einen nicht bzw. nur sehr lokal ausgedehnten Brennpunkt) erzeugt wird. Dazu werden die nachfolgend noch im einzelnen dargestellten Laseroptiken eingesetzt. Die Brennlinie bestimmt so die Zone der Wechselwirkung zwischen Laser und Substrat. Fällt die Brennlinie zumindest abschnittsweise (in Tiefenrichtung gesehen) in das zu trennende Substratmaterial, so können die Laserparameter so gewählt werden, dass eine Wechselwirkung mit dem Material stattfindet, die eine Risszone entlang der gesamten Brennlinie (bzw. entlang des gesamten ausgedehnten Abschnitts der Laserstrahlbrennlinie, die in das Substrat fällt) erzeugt. Wählbare Laserparameter sind beispielsweise die Wellenlänge des Lasers, die Impulsdauer des Lasers, die Pulsenergie des Lasers und auch ggf. die Polarisation des Lasers.

Durch diese Vorbereitung des Konturabtrennens in den Schritten (a), (b) und (d) ist es ermöglicht, Konturen aus sehr dünnen Glassubstraten (Glassubstrate mit Dicken < 300 µm, < 100 µm oder sogar < 50 µm) abzutrennen. Dies erfolgt ohne Kanten, Schäden, Risse, Abplatzungen oder dergleichen an dem nach Abtrennen der Kontur übrigbleibenden Substrat(rest), sodass aufwendige Nachbearbeitungen nicht notwendig sind. Die Zonen innerer Schädigung entlang der Linien können dabei mit hohen Geschwindigkeiten (> 1 m/s) eingebracht werden.

Unter einer Spirale wird sehr allgemein ein (in der Substratebene gesehen) mehrfach ineinander gewickeltes ebenes Liniengebilde nahezu beliebiger Form verstanden, das an einem Punkt (im Zentrum der Innenkontur) beginnt und sich mit zunehmender Wicklungszahl immer weiter dem äußeren Rand der Innenkontur annähert und letztere somit approximiert (eine Spirale ist also nicht auf mathematische Spiralen im engeren Sinne beschränkt).

Die im Anspruch 10 beschriebenen Lasereigenschaften gelten (sofern nichts anderes gesagt ist) ebenso für die Erzeugung und die Strahlführung des materialabtragenden Laserstrahls im Materialabtragsschritt.

Es ist möglich die in den Ansprüchen 10 und 11 genannten Lasertypen als materialabtragende Laser einzusetzen, indem (im Vergleich zum Erzeugen der Vielzahl von Zonen innerer Schädigung mit diesen Lasertypen) der Optikaufbau entsprechend angepasst wird: Es wird keine Brennlinienoptik sondern eine "normale" Linse mit z. B. 100 mm Brennweite (bevorzugt im Bereich zwischen 70 mm und 150 mm) eingesetzt. Bevorzugt ist ein Galvanometer-Scanner-Setup mit F-Theta-Linse.

Weitere mögliche Laser: Nd:YAG Laser mit 532nm / 515nm Wellenlänge. Aber auch ein CO₂-Laser mit 9 bis 11 µm Wellenlänge ist zusammen mit einer Gasdüse sehr gut geeignet.

Es kann sich als günstig erweisen, zwischen dem Schritt (a) einerseits und dem/den Schritt(en) (b) und/oder (d) andererseits z.B. den Abstand zwischen benachbarten Zonen innerer Schädigung zu variieren. Insbesondere eine Erhöhung diese Abstandes beim/bei den Schritt(en) (b) und/oder (d) im Vergleich zum Schritt (a) ist vorteilhaft, da so eine günstige Rissbildung und damit Schädigung im Innenbereich einer Innenkontur stattfindet.

Beispielhafte Parameter können wie folgt sein:
- Für gehärtetes Glas (0.7 mm; DOL 40 µm): Burst 2 Pulse; 200 kHz Repetitionsrate; 3.5 µm Pulsabstand; 25 W Laserleistung; numerische Apertur Optik 0.1; Brennlinienlänge 1.8 mm.
- Für ungehärtetes Glas (2.8 mm): Burst 5 Pulse, 100 kHz Repetitionsrate; 5 µm Pulsabstand, 50 W Laserleistung; numerische Apertur Optik 0.08; Brennlinienlänge 2.8 mm.

Vorteilhafte Vorgehensweisen zum Durchführen des Materialabtragschrittes beschreiben die Ansprüche 12 und 13. Dabei erfolgt beispielsweise ein 20-faches Abfahren der Abtraglinie für ein Glassubstrat der Dicke 0.7 mm, um die Abtraglinie über die gesamte Dicke des Substratmaterials in das Substratmaterial zu schneiden.

Im Vorgehen nach Anspruch 13 können als Laserstrahlen Strahlen aller hier genannten Laser verwendet werden mit Ausnahme eines CO₂-Lasers. Insbesondere kann eine Laserwellenlänge von 532 nm eingesetzt werden. Als Niederschlagsmaterial kann Polyoxymethylen (POM) verwendet werden.

Die Lagerung des Substrats kann beispielsweise mit Hilfe einer Spannvorrichtung mit einer Vertiefung als Hohlraum gewährleistet werden. Durch den Dampfdruck im gasdichten Hohlraum ist ein Austreiben des mittels der Abtraglinie abgetrennten Substratstücks und ggf. sogar ein Austreiben der danach noch verbliebenen, mit dem Substrat noch verbundenen Reste der Kontur möglich.

Vorrichtungen, die zur Durchführung der erfindungsgemäßen Verfahren befähigt sind, sind in den Ansprüchen 15 bis 17 beschrieben. Ein Laser, der gemäß Anspruch 17 dazu befähigt ist, sowohl den Laserstrahl in den Schritten (a), (b) und (d) als auch den materialabtragenden Laserstrahl für den Materialabtragsschritt zu generieren ist beispielsweise ein 50 W Pikosekunden-Laser.

Vorteilhaft kann es zum endgültigen Abtrennen der Kontur vorteilhaft sein, das Substratmaterial nach Einbringen der Vielzahl von Zonen innerer Schädigung mit Feuchtigkeit zu beaufschlagen. Durch Kapillarkräfte wird Wasser in die Schädigungszonen gezogen und kann durch Andocken an offene Bindungen im Glasgefüge (verursacht durch den Laser) Spannungen induzieren, die letztlich helfen einen Riss auszubilden. Es ist somit eine kontrollierte Beaufschlagung der geschnittenen Konturen (Innen- und Außenkontur) mit Wasser möglich, wobei die Beaufschlagung während oder nach der Laserbearbeitung erfolgen kann. Ein Einsatz eines Verdampfers in der Vorrichtung zu Erzeugen eines feuchten Luftstroms und/oder ein Einsatz einer feuchten Substrathalterung oder-aufnahme ist möglich. Ein Wasserreservoir kann im Bereich der einzubringenden Konturlinie vorgesehen werden.

Die vorliegende Erfindung des Erzeugens und Abtrennens einer Kontur in bzw. aus einem flächigen Substrat hat gegenüber den aus dem Stand der Technik bekannten Konturschnittverfahren insbesondere die folgenden Vorteile:
- Durch die Kombination der Einbringung von Zonen innerer Schädigung einerseits (Schritte (a), (b) und ggf. auch (d)) und dem Materialabtrags- und/oder Materialverformschritt (c) andererseits kann eine sehr hohe Abtrennqualität für Konturen erreicht werden: Es treten praktisch keine Ausbrüche auf, die Schnittkanten am Substrat weisen nach dem Heraustrennen der Kontur eine sehr geringe Rauigkeit sowie eine hohe Genauigkeit auf.
- Nahezu beliebig geformte Innenkonturen (kreisförmige Innenkonturen, langlochförmige Innenkonturen oder beliebige Freiformflächen) lassen sich mit hoher Genauigkeit abtrennen. Eine hohe Auflösung von Strukturen der Innenkontur ist dabei möglich.
- Die Ausbildung von Spannungsrissen außerhalb der Innenkontur (also im verbleibenden Substrat) wird vermieden.
- Das Verfahren eignet sich nicht nur zum Heraustrennen von Innenkonturen, sondern auch zum Abtrennen von Außenkonturen mit sehr kleinen Radien oder Ecken bei sehr guter Qualität der entstehenden Außenränder am verbleibenden Substrat. Insbesondere können Außenkonturen, die Hinterschneidungen aufweisen (z.B. schwalbenschwanzförmige Außenkonturen) mit hoher Qualität erzeugt und abgetrennt werden.

Nachfolgend werden Ausführungsbeispielen beschrieben. Dabei wird der hier als Materialabtragsschritt durchgeführte Materialabtrags- und optional zusätzliche Materialverformschritt abkürzend mit (c) bezeichnet. Es zeigen:
Fig. 1: Das Prinzip der Positionierung einer Brennlinie, also die Bearbeitung des für die Laserwellenlänge transparenten Substratmaterials aufgrund induzierter Absorption entlang der Brennlinie in den Schritten (a), (b) und (d).
Fig. 2: Eine für die Schritte (a), (b) und (d) verwendbare optische Anordnung.
Figuren 3a und 3b: Eine weitere für die Schritte (a), (b) und (d) verwendbare optische Anordnung.
Fig. 4: Ein Mikroskopbild der Substratoberfläche (Aufsicht auf die Substratebene) einer gemäß des Schrittes (a) bearbeiteten Glasscheibe.
Fig. 5a bis 5d: Die Schritte (a) bis (d) die zum Heraustrennen einer kreisförmigen Innenkontur aus einem Substrat führen.
Fig. 6: Ein Beispiel für den Schritt (d) bei dem eine Entlastungsspirale als Entlastungslinienabschnitt erzeugt wird.
Fig. 7: Ein Beispiel für das Abtrennen einer Außenkontur von einem Substrat.
Fig. 8: Beispiele für unterschiedliche Schnittführungen zum Heraustrennen einer kreisförmigen Innenkontur.
Fig. 9: Ein Beispiel zum Durchführen eines Materialabtragsschritts.
Fig. 10: Eine Skizze einer Vorrichtung zum Erzeugen und Abtrennen von Konturen.

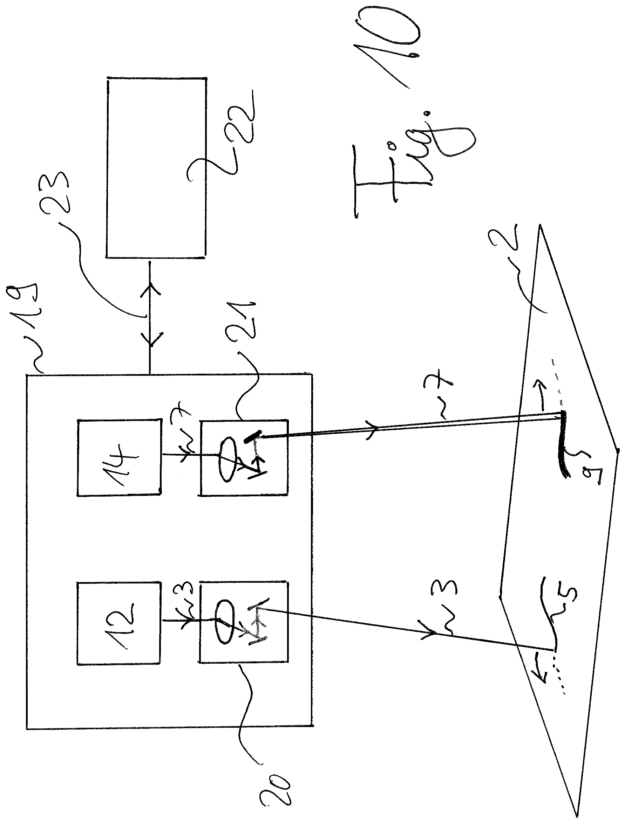

Fig. 1 skizziert die grundlegende Vorgehensweise der Schritte (a), (b) und (d). Ein vom hier nicht gezeigter Laser 12 (Fig. 10) emittierter Laserstrahl 3, der strahleingangsseitig der optischen Anordnung 20 mit dem Bezugszeichen 3a bezeichnet ist, wird auf die optische Anordnung 20 eingestrahlt. Die optische Anordnung 20 formt aus dem eingestrahlten Laserstrahl strahlausgangsseitig über einen definierten Ausdehnungsbereich entlang der Strahlrichtung (Länge l der Brennlinie) eine ausgedehnte Laserstrahlbrennlinie 3b. Zumindest abschnittsweise die Laserstrahlbrennlinie 3b der Laserstrahlung 3 überdeckend wird im Strahlengang nach der optischen Anordnung das zu bearbeitende, flächige Substrat 2 positioniert. Das Bezugszeichen 4v bezeichnet die der optischen Anordnung 20 bzw. dem Laser zugewandte Oberfläche des flächigen Substrats, das Bezugszeichen 4r die hierzu üblicherweise parallele, beabstandete rückseitige Oberfläche des Substrats 2. Die Substratdicke (senkrecht zu den Flächen 4v und 4r, also zur Substratebene gemessen) ist hier mit dem Bezugszeichen 10 bezeichnet.

Wie Figur 1a zeigt, ist hier das Substrat 2 senkrecht zur Strahllängsachse und somit zur im Raum durch die optische Anordnung 20 hinter derselben erzeugten Brennlinie 3b ausgerichtet (das Substrat steht senkrecht auf der Zeichnungsebene) und entlang der Strahlrichtung gesehen relativ zur Brennlinie 3b so positioniert, dass die Brennlinie 3b in Strahlrichtung gesehen vor der Oberfläche 4v des Substrats beginnt und vor der Oberfläche 4r des Substrats, also noch innerhalb des Substrats, endet. Die ausgedehnte Laserstrahlbrennlinie 3b erzeugt somit (bei geeigneter Laserintensität entlang der Laserstrahlbrennlinie 3b, die durch die Fokussierung des Laserstrahls 3 auf einen Abschnitt der Länge I, also durch einen Linienfokus der Länge l sichergestellt wird) im Überdeckungsbereich der Laserstrahlbrennlinie 3b mit dem Substrat 2, also im Material des Substrats das von der Brennlinie 3b überstrichen wird, einen entlang der Strahllängsrichtung gesehen ausgedehnten Abschnitt 3c, entlang dessen eine induzierte Absorption im Material des Substrats erzeugt wird, die entlang des Abschnitts 3c eine Rissbildung im Material des Substrats induziert. Die Rissbildung erfolgt dabei nicht nur lokal, sondern über die gesamte Länge des ausgedehnten Abschnitts 3c der induzierten Absorption (also der Zone innerer Schädigung). Die Länge dieses Abschnitts 3c (also letztendlich die Länge der Überdeckung der Laserstrahlbrennlinie 3b mit dem Substrat 2) ist hier mit dem Bezugszeichen L versehen. Der mittlere Durchmesser bzw. die mittlere Ausdehnung des Abschnitts der induzierten Absorption (bzw. der Bereiche im Material des Substrats 2, die der Rissbildung unterzogen werden) ist hier mit dem Bezugszeichen D bezeichnet. Diese mittlere Ausdehnung D entspricht hier im wesentlichen dem mittleren Durchmesser δ der Laserstrahlbrennlinie 3b.

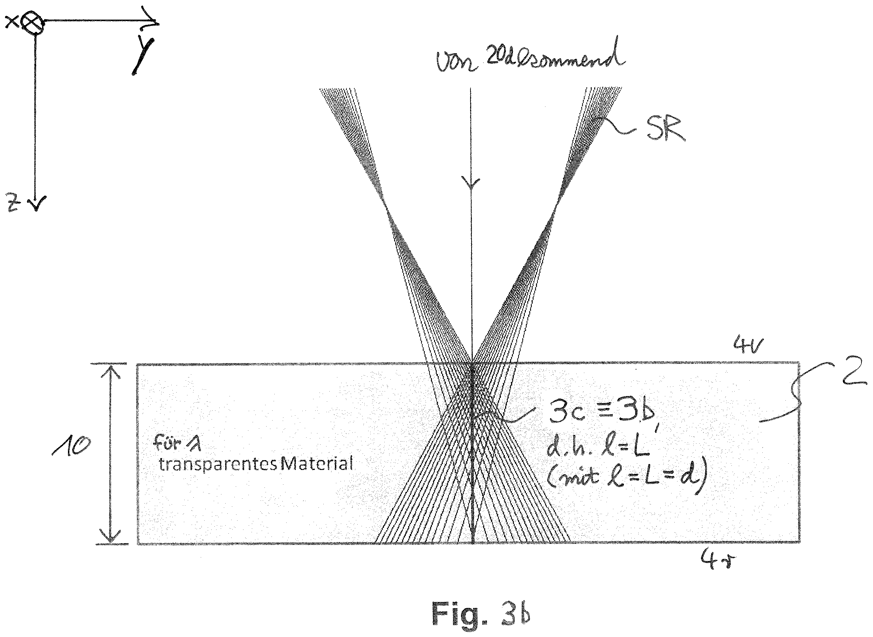

Wie Figur 1a zeigt, wird somit für die Wellenlänge λ des Laserstrahls 3 transparentes Substratmaterial durch induzierte Absorption entlang der Brennlinie 3b erwärmt. Figur 3b skizziert, dass sich das erwärmte Material letztendlich ausdehnt, sodass eine entsprechend induzierte Spannung zur Mikrorissbildung führt, wobei die Spannung an der Oberfläche 4v am größten ist.

Nachfolgend werden konkrete optische Anordnungen 20, die zur Erzeugung der Brennlinie 3b eingesetzt werden können, sowie ein konkreter optischer Aufbau (Figur 10), in dem diese optischen Anordnungen eingesetzt werden können, beschrieben. Alle Anordnungen bzw. Aufbauten basieren dabei auf dem Vorbeschriebenen, sodass für identische oder sich in ihrer Funktion entsprechende Bauteile bzw. Merkmale jeweils identische Bezugszeichen verwendet werden. Nachfolgend werden daher jeweils nur die Unterschiede beschrieben.

Da die letztendlich zur Separation führende Trennfläche von hoher Qualität (hinsichtlich Bruchfestigkeit, geometrischer Präzision, Rauigkeit und der Vermeidung von Nachbearbeitungserfordernissen) ist bzw. sein soll, sollten die einzelnen entlang z.B. der Konturlinie 5 auf der Oberfläche des Substrats zu positionierenden Brennlinien 5-1, 5-2,... wie mit den nachfolgenden optischen Anordnungen beschrieben erzeugt werden (die optische Anordnung wird nachfolgend alternativ auch als Laseroptik bezeichnet). Die Rauigkeit ergibt sich dabei insbesondere aus der Spotgröße bzw. dem Spotdurchmesser der Brennlinie. Um bei gegebener Wellenlänge λ des Lasers 12 (Wechselwirkung mit dem Material des Substrats 2) eine geringe Spotgröße von beispielsweise 0.5 µm bis 2 µm erreichen zu können, sind in der Regel bestimmte Anforderungen an die numerische Apertur der Laseroptik 20 zu stellen. Diese Anforderungen werden durch die nachfolgend beschriebenen Laseroptiken 20 erfüllt.

Zum Erzielen der gewünschten numerischen Apertur muss zum einen die Optik bei gegebener Brennweite die nötige Öffnung aufweisen, gemäß den bekannten Formeln von Abbe (N.A. = n sin (theta), n: Brechzahl des zu bearbeitenden Glases, theta: halber Öffnungswinkel; und theta = arctan (D/2f); D: Öffnung, f: Brennweite). Zum anderen muss der Laserstrahl die Optik bis zur nötigen Öffnung ausleuchten, was typischerweise durch Strahlaufweitung mittels Aufweitteleskopen zwischen Laser und Fokussieroptik bewerkstelligt wird.

Die Spotgröße sollte dabei für eine gleichförmige Wechselwirkung entlang der Brennlinie nicht zu stark variieren. Dies kann z.B. dadurch sichergestellt werden (siehe Ausführungsbeispiel unten), dass die fokussierende Optik nur in einem schmalen, ringförmigen Bereich ausgeleuchtet wird, indem sich dann naturgemäß die Strahlöffnung und damit die numerische Apertur prozentual nur gering ändern.

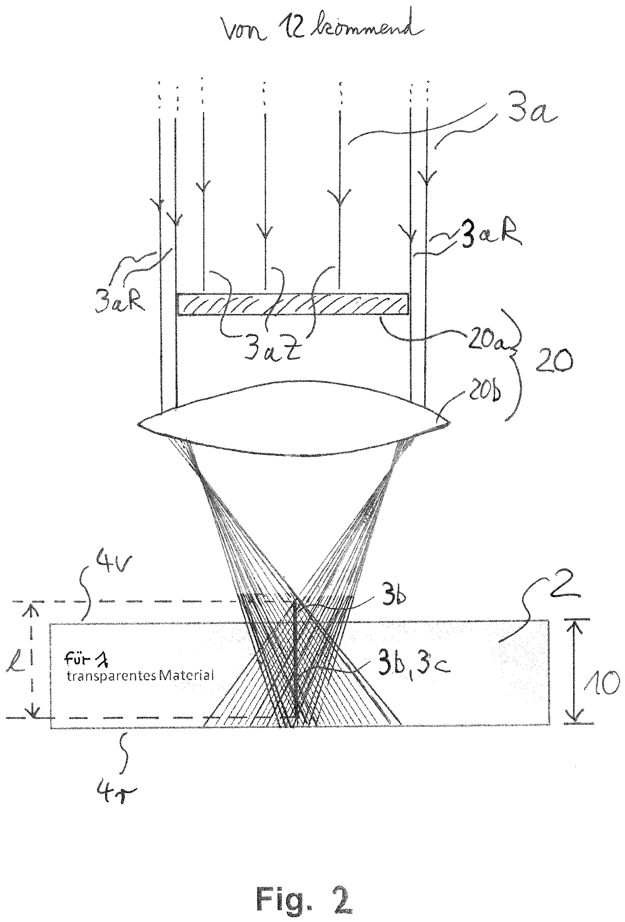

Gemäß Figur 2 (Schnitt senkrecht zur Substratebene auf Höhe des Zentralstrahls im Laserstrahlenbündel der Laserstrahlung 12; auch hier erfolgt die Einstrahlung des Laserstrahls 3 senkrecht zur Substratebene, sodass die Brennlinie 3b bzw. der ausgedehnte Abschnitt der induzierten Absorption 3a parallel zur Substratnormalen ist) wird die vom Laser 3 emittierte Laserstrahlung 3a zunächst auf eine kreisförmige Blende 20a, die für die verwendete Laserstrahlung vollständig intransparent ist, gerichtet. Die Blende 20a ist dabei senkrecht zur Strahllängsachse orientiert und auf den Zentralstrahl des gezeigten Strahlenbündels 3a zentriert. Der Durchmesser der Blende 20a ist so gewählt, dass die nahe des Zentrums des Strahlenbündels 3a bzw. des Zentralstrahls liegenden Strahlenbündel (hier mit 3aZ bezeichnet) auf die Blende auftreffen und von dieser vollständig absorbiert werden. Lediglich im äußeren Umfangsbereich des Strahlenbündels 3a liegende Strahlen (Randstrahlen, hier mit 3aR bezeichnet) werden aufgrund der im Vergleich zum Strahldurchmesser verringerten Blendengröße nicht absorbiert, sondern passieren die Blende 20a seitlich und treffen auf die Randbereiche des hier als sphärisch geschliffene, bi-konvexe Linse 20b ausgebildeten fokussierenden optischen Elements der optischen Anordnung 20.

Die auf den Zentralstrahl zentrierte Linse 20b ist hier bewusst als nichtkorrigierte, bi-konvexe fokussierende Linse in Form einer üblichen sphärisch geschliffenen Linse ausgebildet. Mit anderen Worten wird die sphärische Aberration einer solchen Linse bewusst ausgenutzt. Alternativ dazu können auch von ideal korrigierten Systemen abweichende Asphären oder Mehrlinser, die gerade keinen idealen Fokuspunkt, sondern eine ausgeprägte, langgestreckte Fokuslinie definierter Länge bilden, eingesetzt werden (also Linsen bzw. Systeme, die gerade keinen einzelnen Brennpunkt mehr aufweisen). Die Zonen der Linse fokussieren somit gerade in Abhängigkeit vom Abstand von der Mitte der Linse entlang einer Brennlinie 3b. Der Durchmesser der Blende 20a quer zur Strahlrichtung beträgt hier etwa 90 % des Durchmessers des Strahlbündels (Strahlbündeldurchmesser definiert durch die Ausdehnung bis zum Abfall auf 1/e) und ca. 75 % des Durchmessers der Linse der optischen Anordnung 20. Es wird somit die Brennlinie 3b einer nicht-aberrationskorrigierten sphärischen Linse 20b genutzt, die durch Ausblenden der Strahlenbündel in der Mitte erzeugt wurde. Dargestellt ist der Schnitt in einer Ebene durch den Zentralstrahl, das vollständige dreidimensionale Bündel ergibt sich, wenn man die dargestellten Strahlen um die Brennlinie 3b rotiert.

Eine verbesserte einsetzbare optische Anordnung 20 ergibt sich, wenn diese sowohl ein Axicon als auch eine fokussierende Linse umfasst.

Figur 3a zeigt eine solche optische Anordnung 20, bei der im Strahlengang des Lasers 12 entlang der Strahlrichtung gesehen zunächst ein erstes optisches Element mit einer nicht-sphärischen Freifläche, die zum Ausbilden einer ausgedehnten Laserstrahlbrennlinie 3b ausgeformt ist, positioniert ist. Im gezeigten Fall ist dieses erste optische Element ein Axicon 20c mit 5° Kegelwinkel, das senkrecht zur Strahlrichtung und auf den Laserstrahl 3 zentriert positioniert ist. Ein Axicon oder Kegelprisma ist eine spezielle, konisch geschliffene Linse, die eine Punktquelle auf eine Linie entlang der optischen Achse bildet (oder auch einen Laserstrahl ringförmig transformiert). Der Aufbau eines solchen Axicons ist dem Fachmann grundsätzlich bekannt; der Kegelwinkel beträgt hier beispielsweise 10°. Die Kegelspitze des Axicons zeigt dabei entgegen der Strahlrichtung. In Strahlrichtung im Abstand z1 vom Axicon 20c ist ein zweites, fokussierendes optisches Element, hier eine plankonvexe Linse 20d (deren Wölbung zum Axicon hin zeigt) positioniert. Der Abstand z1 ist mit hier mit ca. 300 mm so gewählt, dass die vom Axicon 20c geformte Laserstrahlung ringförmig auf den außenliegenden Bereichen der Linse 20d auftrifft. Die Linse 20d fokussiert die ringförmig auftreffende Strahlung strahlausgangsseitig im Abstand z2 von hier ca. 20 mm von der Linse 20d auf eine Brennlinie 3b definierter Länge von hier 1.5 mm. Die effektive Brennweite der Linse 20d beträgt hier 25 mm. Die ringförmige Transformation des Laserstrahls durch das Axicon 20c ist hier mit dem Bezugszeichen SR versehen.

Figur 3b zeigt die Ausbildung der Brennlinie 3b bzw. der induzierten Absorption 3c im Material des Substrats 2 gemäß Fig. 3a im Detail. Die optischen Eigenschaften der beiden Elemente 20c, 20d sowie die Positionierung derselben erfolgt hier so, dass die Ausdehnung l der Brennlinie 3b in Strahlrichtung exakt mit der Dicke 10 des Substrats 2 übereinstimmt. Dementsprechend ist eine genaue Positionierung des Substrats 2 längs der Strahlrichtung notwendig, um, wie in Figur 3b gezeigt, die Brennlinie 3b exakt zwischen den beiden Oberflächen 4v und 4r des Substrats 2 zu positionieren.

Es ist es somit vorteilhaft, wenn sich die Brennlinie in einem bestimmten Abstand der Laseroptik bildet, und der Großteil der Laserstrahlung bis an ein gewünschtes Ende der Brennline fokussiert wird. Dies kann wie beschrieben dadurch erreicht werden, dass ein hauptsächlich fokussierendes Element 20d (Linse) nur ringförmig auf einer gewünschten Zone beleuchtet wird, wodurch zum einen die gewünschte numerische Apertur und somit die gewünschte Spotgröße realisiert wird, zum anderen jedoch nach der gewünschten Brennline 3b der Zerstreuungskreis über sehr kurze Distanz in der Mitte des Spots an Intensität verliert, da sich ein im Wesentlichen ringförmiger Spot ausbildet. Somit wird die Rissbildung innerhalb kurzer Distanz in der gewünschten Tiefe des Substrats gestoppt. Eine Kombination aus Axicon 20c und Fokuslinse 20d erfüllt diese Anforderung. Hierbei wirkt das Axicon 20c in zweierlei Weise: durch das Axicon 20c wird ein gewöhnlich runder Laserspot ringförmig auf die fokussierende Linse 20d gesendet und die Aspherizität des Axicons 20c bewirkt, dass sich anstatt eines Brennpunktes in der Fokusebene der Linse eine Brennlinie außerhalb der Fokusebene bildet. Die Länge I der Brennlinie 3b kann eingestellt werden über den Strahldurchmesser auf dem Axicon. Die numerische Apertur entlang der Brennlinie wiederum kann eingestellt werden über den Abstand z1 Axicon-Linse und über den Kegelwinkel des Axikons. Auf diese Weise kann somit die gesamte Laserenergie in der Brennlinie konzentriert werden.

Soll die Rissbildung (in der Zone innerer Schädigung) bis auf die Austrittsseite des Substrates anhalten, so hat die ringförmige Beleuchtung immer noch den Vorteil, dass zum einen die Laserleistung bestmöglich genutzt wird, da ein Großteil des Laserlichtes in der gewünschten Länge der Brennlinie konzentriert bleibt, zum anderen durch die ringförmige beleuchtete Zone zusammen mit der durch die anderen optischen Funktionen eingestellten, gewünschten Aberration eine gleichförmige Spotgröße entlang der Brennlinie, und dass somit ein gleichförmiger Trennprozess entlang der Brennlinie erreicht werden kann.

Anstelle der in Figur 3a gezeigten plankonvexen Linse kann auch eine fokussierende Meniskuslinse oder eine andere höher korrigierte Fokussierlinse (Asphäre, Mehrlinser) eingesetzt werden.

Borosilikat- oder Sodalime-Gläser 2 ohne sonstige Einfärbungen (insb. mit niedrigem Eisengehalt) sind optisch transparent von ca. 350 nm bis ca. 2.5 µm. Gläser sind generell schlechte Wärmeleiter, weshalb Laser-Impulsdauern von wenigen Nanosekunden bereits keine wesentliche Wärmediffusion aus einer Brennlinie 3b heraus erlauben. Dennoch sind noch kürzere Laser-Impulsdauern vorteilhaft, da mit Sub-Nanosekunden- bzw. Pikosekunden-Pulsen eine gewünschte induzierte Absorption über nichtlineare Effekte leichter zu erreichen ist (Intensität wesentlich höher).

Zur Durchtrennung von Flachgläsern geeignet ist z.B. ein handelsüblicher Picosekunden-Laser 12, der folgende Parameter aufweist: Wellenlänge 1064 nm, Impulsdauer von 10 ps, Pulswiederhol-Frequenz von 100 kHz, mittlere Leistung (gemessen direkt nach dem Laser) von bis zu 50 W. Der Laserstrahl weist zunächst einen Strahldurchmesser (gemessen bei 13% der Spitzenintensität, d.h. 1/e²-Durchmesser eines Gauss-Strahlbündels) von ca. 2 mm auf, die Strahlqualität beträgt mindestens M² < 1.2 (bestimmt nach DIN/ISO 11146). Mit einer Strahlaufweitungsoptik (handelsübliches Strahlteleskop nach Kepler) kann der Strahldurchmesser um den Faktor 10 auf ca. 20-22 mm erhöht werden. Mit einer sog. annularen Blende 20a von 9 mm Durchmesser wird der innere Teil des Strahlenbündels abgeblendet, sodass sich ein ringförmiger Strahl bildet. Mit diesem ringförmigen Strahl wird z.B. eine plankonvexe Linse 20b mit 28 mm Brennweite (Quarzglas mit Radius 13 mm) beleuchtet. Durch die starke (gewünschte) sphärische Aberration der Linse 20b entsteht die Brennlinie.

Der theoretische Durchmesser δ der Brennlinie variiert entlang der Strahlachse, deshalb ist es für die Erzeugung einer homogenen Rissfläche vorteilhaft, wenn die Substratdicke 10 hier geringer ist als ca. 1 mm (typische Dicken für Displaygläser sind 0.5 mm bis 0.7 mm). Mit einer Spotgröße von ca. 2 µm und einem Abstand von Spot zu Spot von 5 µm ergibt sich eine Geschwindigkeit von 0.5 m/sec, mit der die Brennlinie entlang der Konturlinie 5 über das Substrat 2 geführt werden kann (vgl. Fig. 4). Mit 25 W mittlerer Leistung auf dem Substrat (gemessen nach der Fokussierlinse 7) ergibt sich aus der Impulsfolgefrequenz von 100 kHz eine Pulsenergie von 250 µJ, die auch in einem strukturierten Puls (rapide Abfolge von Einzelimpulsen im Abstand von nur 20 ns, sog. Burstpuls) von 2 bis 5 Sub-Pulsen erfolgen kann.

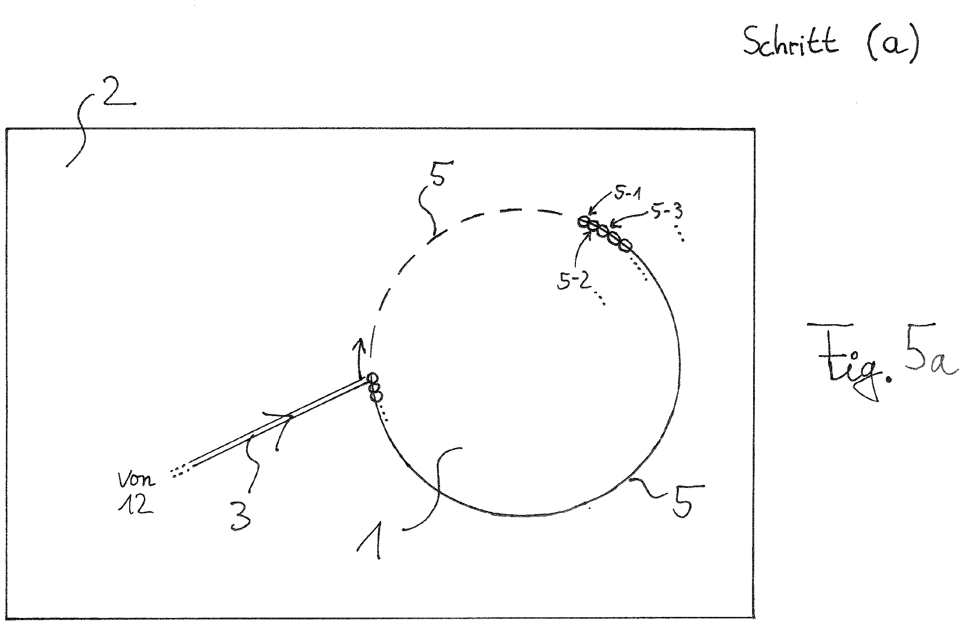

Ungehärtete Gläser haben im Wesentlichen keine inneren Spannungen, weshalb hier die noch verhakte und mit ungetrennten Brücken verbundene Störungszone ohne äußere Einwirkung die Teile zuerst noch zusammenhält. Wenn man jedoch eine thermische Spannung einbringt, trennt sich die Kontur 1 schließlich vollständig und ohne weitere äußere Krafteinbringung vom Substrat 2. Hierzu wird ein CO₂-Laser mit bis zu 250 W mittlerer Leistung auf eine Spotgröße von ca. 1 mm fokussiert, und dieser Spot mit bis zu 0.5 m/s über die Konturlinie 5, die Risslinien 6 und ggf. auch die Entlastungslinie 11 geführt (vgl. Fig. 5a bis 5d). Der lokale thermische Stress durch die eingebrachte Laserenergie (5 J pro cm der Linien) trennt die Kontur 1 vollständig ab.

Zum Abtrennen in dickeren Gläsern muss die Schwellintensität für den Prozess (induzierte Absorption und Ausbildung einer Störungszone durch thermischen Schock) naturgemäß über eine längere Brennlinie l erreicht werden. Somit folgen höhere nötige Pulsenergien und höhere mittlere Leistungen. Mit dem oben beschriebenen Optikaufbau und der maximal zur Verfügung stehenden Laserleitung (nach Verlusten durch Optik) von 39 W auf dem Substrat gelingt die Durchtrennung von ca. 3 mm dickem Glas. Dabei ist zum einen die annulare Blende 20a entfernt, und zum anderen der Abstand Linse 20b zu Substrat so korrigiert (erhöht in Richtung nomineller Fokusabstand), dass eine längere Brennlinie im Substrat entsteht.

Nachfolgend wird ein weiteres Ausführungsbeispiel zum Durchtrennen von gehärtetem Glas vorgestellt.

Natriumhaltige Gläser werden gehärtet, indem durch Tauchen in flüssige Kaliumsalz-Bäder an der Glasoberfläche Natrium gegen Kalium ausgetauscht wird. Dies führt zu einer erheblichen inneren Spannung (Druckspannung) in einer 5-50 µm dicken Schicht an den Oberflächen, was wiederum zu der höheren Stabilität führt.

Grundsätzlich sind die Prozessparameter beim Durchtrennen gehärteter Gläser ähnlich denen bei ungehärteten Gläsern vergleichbarer Dimension und Zusammensetzung. Allerdings kann das gehärtete Glas durch die innere Spannung sehr viel leichter zerspringen, und zwar durch ungewünschtes Risswachstum, die nicht entlang der gelaserten Sollbruchfläche 5, sondern in das Material hinein erfolgt. Deshalb ist das Parameterfeld für das erfolgreiche Durchtrennen eines bestimmten gehärteten Glases enger gefasst. Insbesondere die mittlere Laserleistung und die dazugehörige Schnittgeschwindigkeit müssen recht genau eingehalten werden, und zwar in Abhängigkeit von der Dicke der gehärteten Schicht. Für ein Glas mit 40 µm dicker gehärteter Schicht und 0.7 mm Gesamtdicke ergeben sich bei dem o.g. Aufbau z.B. folgende Parameter: Schnittgeschwindigkeit von 1m /s bei 100 kHz Pulsfolgefrequenz, daher ein Spotabstand von 10 µm, bei einer mittleren Leistung von 14 W. Zudem ist speziell für solche Gläser die Schrittabfolge (a) bis (c) (bevorzugt mit (d)) entscheidend, um unerwünschte Risse und Zerstörungen im zurückbleibenden Substrat 2 zu verhindern.

Sehr dünne gehärtete Gläser (< 100 µm) bestehen überwiegend aus verspanntem Material, d.h. Vorder- und Rückseite sind z.B. jeweils 30 µm natriumverarmt und somit gehärtet, und nur 40 µm im Inneren sind ungehärtet. Dieses Material zerspringt sehr leicht und vollständig, wenn eine der Oberflächen verletzt wird. Solch gehärtete Glasfolien waren im Stand der Technik bisher nicht bearbeitbar, sind es jedoch mit dem vorgestellten Verfahren.

Die Durchtrennung dieses Materials gelingt, wenn a) der Durchmesser der Brennlinie sehr klein ist, z.B. kleiner 1 µm, b) der Abstand von Spot zu Spot gering ist, z.B. zwischen 1 und 2 µm, und c) die Trenngeschwindigkeit hoch genug ist, sodass das Risswachstum dem Laserprozess nicht vorauseilen kann (hohe Laserpuls-Wiederholfrequenz z.B. 200 kHz bei 0.2 bis 0.5 m/s).

Figur 4 zeigt ein Mikroskopbild der Oberfläche einer gemäß Schritt (a) bearbeiteten Glasscheibe. Die einzelnen Brennlinien bzw. ausgedehnte Abschnitte induzierter Absorption 3c entlang der Konturlinie 5, die hier mit den Bezugszeichen 5-1, 5-2,... versehen sind (in die Tiefe des Substrats senkrecht zur dargestellten Oberfläche) verbinden sich entlang der Linie 5, entlang derer der Laserstrahl über die Oberfläche 4v des Substrats geführt wurde, durch Rissbildung zu einer Trennfläche zur Separation der Substratteile, die über die weiteren Schritte erfolgt. Gut zu sehen ist die Vielzahl der einzelnen ausgedehnten Abschnitte induzierter Absorption 5-1, 5-2,..., wobei im gezeigten Fall die Pulswiederholfrequenz des Lasers so auf die Vorschubgeschwindigkeit zur Bewegung des Laserstrahls über die Oberfläche 4v abgestimmt wurde, dass das Verhältnis a/δ aus dem mittleren Abstand a unmittelbar benachbarter Abschnitte 5-1, 5-2,... und dem mittleren Durchmesser δ der Laserstrahlbrennlinie etwa 2.0 beträgt.

Figuren 5a-5d zeigen beispielhaft die Bearbeitung eines 0.7 mm dicken Glassubstrats 2 in Aufsicht auf die Substratebene.

Wie Figur 5a zeigt, wird im Konturdefinitionsschritt (a) der Laserstrahl 3 eines Nd:YAG Lasers mit einer Wellenlänge Lambda von 1064 µm (der Laser 12 ist hier nicht gezeigt) senkrecht auf die Substratebene eingestrahlt und entlang der die zu erzeugende Kontur 1 kennzeichnenden Konturlinie 5 geführt. Die zu erzeugende Kontur 1 ist hier eine kreisförmige Innenkontur, die aus dem Substrat 2 herausgetrennt werden soll. Ziel der Bearbeitung ist somit das Herstellen eines exakt kreisförmigen Loches im Substrat 2. Die kreisförmige Innenkontur 1 bzw. das Substratmaterial derselben kann während der Verfahrensschritte (a) bis (d) zerstört werden, da die übrig bleibenden Substratabschnitte 2 das gewünschte Herstellungsprodukt darstellen.

Wie Figur 5a zeigt wird durch den Pulsbetrieb des Lasers 12 vermittels des Laserstrahls 3 entlang der Konturlinie 5 im Substratmaterial eine Vielzahl einzelner Zonen 5-1, 5-2, ... innerer Schädigung (Abschnitte induzierter Absorption entlang eines in Strahlrichtung gesehen ausgedehnten Abschnitts der mittels des Lasers erzeugten Laserstrahlbrennlinie) erzeugt. Die einzelnen Zonen innerer Schädigung werden dabei wie zu Figur 4 beschrieben erzeugt (dies gilt auch für die nachfolgenden noch beschriebenen Schritte (d) und (b)).

Nachdem über dem gesamten Kreisumfang 5 solche Zonen innerer Schädigung 5-1, 5-2,... erzeugt wurden, ist zwar im Substrat 2 eine der herauszutrennenden Innenkontur 1 entsprechende Bruchlinie erzeugt worden, das Material der Innenkontur 1 ist jedoch wie bereits beschrieben noch nicht vollständig vom Material des übrig bleibenden Substratabschnitts 2 getrennt. Die weiteren Schritte (b) bis (d) dienen nun dazu, das Material der Innenkontur 1 vollständig vom Substrat 2 so abzutrennen, dass jegliche Schädigungen (wie Risse, Abplatzungen und dergleichen) im übrig bleibenden Substratmaterial vermieden werden.

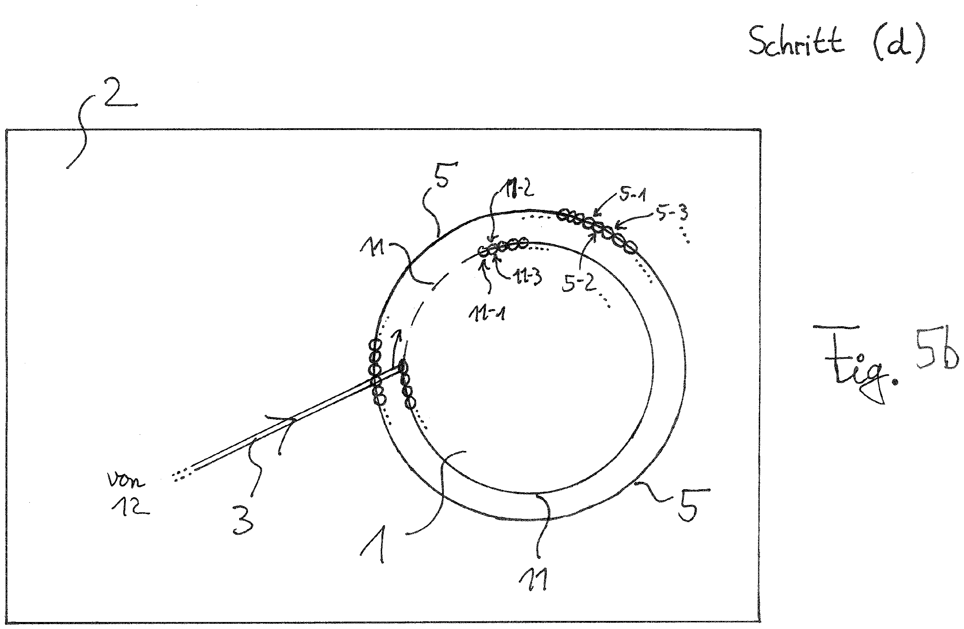

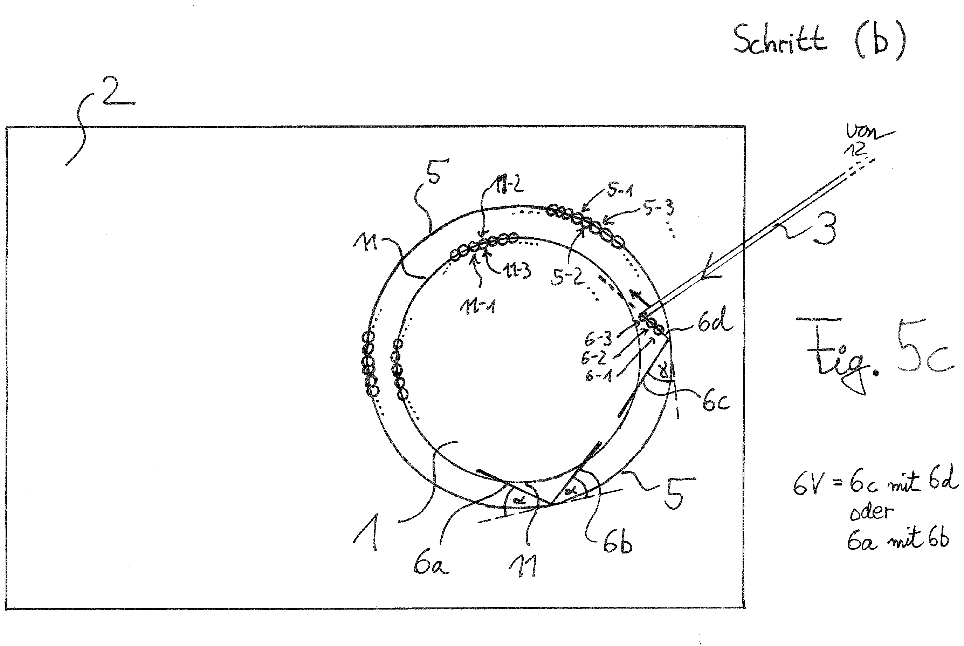

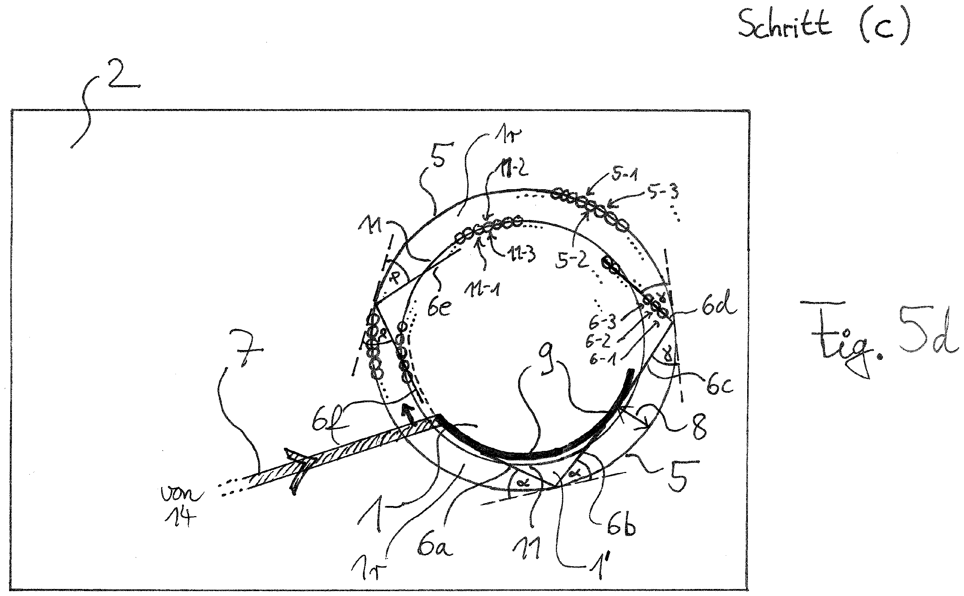

Um dies zu erreichen, wird zunächst in einem dem Schritt (a) nachfolgenden Spannungsentlastungschritt (d), vgl. Figur 5b (in der die bereits in Figur 5a beschriebenen Merkmale mit identischen Bezugszeichen versehen sind; dies gilt dann auch für die nachfolgenden Figuren 5c und 5d), konzentrisch innerhalb der Konturlinie 5 und beabstandet von letzterer, also im Material der Innenkontur 1, ein den Verlauf der Konturlinie 5 (hier durch konstanten Abstand von dieser) approximierender Entlastungslinienabschnitt 11 eingebracht. Die Einbringung des hier ebenfalls kreisförmigen Entlastungslinienabschnitts 11 erfolgt dabei vermittels des Lasers 12 mit denselben Laserparametern wie für die Konturlinie 5, sodass entlang des vollständigen Kreisumfangs des Abschnitts 11 im Substratmaterial jeweils eine Vielzahl einzelner Zonen 11-1, 11-2,... innerer Schädigungen erzeugt wird. Auch die Einbringung dieser Zonen erfolgt wie zu Figur 4 beschrieben.

Dieser Schritt (d) dient dazu, einen Spannungsabbau zu realisieren, d. h. beim Einbringen der Konturlinie eingebrachte latente Spannungen im Substratmaterial könnten bei kleinen Konturradien und stark verspannten Gläsern ansonsten zu einem Zerreißen des gesamten Substrates führen. Dies kann durch den Zusatzschnitt des Schritts (d) verhindert werden, der aber kein Muss ist. Dieser Schnitt kann eine Spirale als Form haben, kann aber auch als "Kreis-im-Kreis" ausgeführt sein, der sich der Konturlinie annähert. Ziel dieses Schnittes ist es, den Abstand des Entlastungslinienabschnitts 11 zur Target-Kontur zu minimieren, um möglichst wenig Material stehen zu lassen und so ein Selbstablösen zu ermöglichen oder zu fördern. Beispielwerte für die maximale Annäherung des Entlastungslinienabschnitts 11 an die Konturlinie 5 sind hier ca. 20 µm bis 50 µm.

Figur 5c zeigt den nach dem Spannungsentlastungsschritt (d) durchgeführten Rissdefinitionsschritt (b). In diesem Schritt wird der Laserstrahl 3 des Lasers 12 ebenso wie in den Schritten (a) und (d) über die Substratoberfläche bzw. die Innenkonturoberfläche geführt, sodass auch hier entlang der in die Innenkontur 1 einbeschriebenen Strukturen 6 eine Vielzahl einzelner Zonen 6-1, 6-2,... innerer Schädigung wie in Figur 4 gezeigt eingebracht werden.

Wie Figur 5c zeigt werden dazu mehrere gradlinige, an einem Ort auf der Konturlinie 5 ansetzende, von der Konturlinie 5 jeweils unter einem Winkel α von hier 25° wegführende und in die abzutrennende Kontur 1 hineinführende Risslinienabschnitte 6a, 6b,... erzeugt. Dabei beginnen jeweils genau zwei Risslinienabschnitte (beispielsweise die Risslinienabschnitte 6a und 6b) an ein und demselben Ort auf der Konturlinie 5 und erstrecken sich in einander gegenüberliegende Richtungen jeweils unter dem Winkel α in die Innenkontur 1 soweit hinein, dass sie den zuvor eingebrachten Entlastungslinienabschnitt 11 schneiden. Der Winkel α ist hier der Winkel zwischen der Tangente an die Konturlinie 5 an demjenigen Ort, an dem die beiden von diesem Ort in im Wesentlichen gegenüberliegende Richtungen in das Material der Innenkontur 1 hineinführenden Risslinienabschnitte (beispielsweise die Abschnitte 6a und 6b oder auch die Abschnitte 6c und 6d) beginnen, und der Tangenten an den jeweiligen Risslinienabschnitt an diesem Ort (bzw. dem Risslinienabschnitt selbst, da dieser mit seiner Tangenten zusammenfällt).

Auf die vorbeschriebene Art und Weise werden entlang des gesamten Umfangs der Konturlinie 5 mehrere aus jeweils genau zwei an ein und demselben Ort auf der Konturlinie 5 beginnenden Risslinienabschnitte bestehende V-förmige Risslinien 6V, die von der Konturlinie 5 über die zwischen dieser und dem Entlastungslinienabschnitt 11 liegenden Oberflächenabschnitte der Innenkontur 1 hinweg führen, den Entlastungslinienabschnitt 11 schneiden und in den innerhalb des Entlastungslinienabschnitt 11 liegenden Bereich der Innenkontur 1 hinein führen erzeugt. Die beiden Schenkel ein und derselben V-förmigen Risslinie 6V führen dabei entlang der Tangenten an die Konturlinie 5 am Ort der Spitze der jeweiligen Risslinie gesehen symmetrisch zur Normalen auf diese Tangente, also beidseits der Normalen, in die Innenkontur 1 hinein. Kleinere Winkel α von beispielsweise α=10° oder auch größere Winkel von beispielsweise a=35° sind je nach Kreisumfang der Linien 5 und 11 sowie dem Abstand dieser beiden Kreislinien voneinander möglich.

Die Risslinienabschnitte 6a, 6b,... müssen dabei nicht unbedingt, auch wenn dies bevorzugt ist, unmittelbar an einem Ort auf der Konturlinie 5 ansetzen, sondern können auch geringfügig von der Konturlinie 5 beabstandet an einem im Innenkonturmaterial 1 liegenden Ort beginnen und über den Entlastungslinienabschnitt 11 hinaus in den innerhalb desselben liegenden Materialabschnitt geführt werden (der Winkel α wird dann zwischen der gedanklich fortgesetzten Schnittlinie des jeweiligen Risslinienabschnitts mit der Konturlinie 5 einerseits und der Tangente an die Konturlinie 5 andererseits berechnet).

Auf die vorbeschriebene Art und Weise werden vorzugsweise fünf bis zehn V-förmige Risslinien entlang des Umfangs der kreisförmigen Linien 5, 11 erzeugt.

Die Risslinien 6V bzw. die Risslinienabschnitte 6a, 6b,... derselben werden dabei bevorzugt so platziert und ausgerichtet, dass das Auslösverhalten beim und/oder nach dem materialabtragenden Laserschritt (c) verbessert wird. Es wird der nach dem materialabtragenden Laserschritt (c) verbleibende Materialring gezielt so segmentiert, dass sich Einzelsegmente des Kreisrings leichter auslösen lassen. In die V-Schnitte wird versucht, eine nach innen gerichtete Spannung aufzubauen, so dass die Teilsegmente nach dem materialabtragenden Laserschritt (c) möglichst von selbst nach innen gedrückt werden. Diese V-Schnitte sind jedoch kein Muss, da das Verfahren auch ohne diese funktionieren kann.

Wesentlich ist somit, dass sich einzelne der mit den V-förmigen Risslinien in das Material des Kreisringabschnitts zwischen den beiden Strukturen 5 und 11 einbeschriebenen Ringmaterialabschnitte (hier: die näherungsweise dreiecksförmigen Abschnitte zwischen den beiden Schenkeln ein und derselben V-förmigen Risslinie) zum Zentrum der Innenkontur 1 hin bewegen könnten (wenn sie denn vermittels der Zonen 6-1, 6-2,... bereits vollständig abgelöst wären), ohne sich mit benachbarten Ringmaterialabschnitten zu verhaken.

Figur 5d zeigt schließlich den nach dem Rissdefinitionsschritt (b) durchgeführten Materialabtragsschritt (c). (In Figur 5d sind aus Übersichtlichkeitsgründen lediglich drei der im Schritt (b) eingebrachten V-förmigen Risslinien eingezeichnet.)

Im Schritt (c) wird ein von einem hier nicht gezeigten Laser 14 erzeugter materialabtragender Laserstrahl 7 auf die Substratoberfläche gerichtet. Im Vergleich zum Einbringen der Vielzahl von Zonen innerer Schädigung in den Schritten (a), (b), (d) wie zu Figur 4 beschrieben, unterscheiden sich die Parameter des materialabtragenden Laserstrahls 7 vom Laserstrahl 3 wie folgt: Es wird ein punktueller Fokus bzw. eine punktuelle Schädigung mit einhergehendem Materialabtrag angewendet. Wellenlänge: zwischen 300 nm und 11000 nm; besonders geeignet 532nm oder 10600 nm. Pulsdauern: 10 ps, 20 ns oder auch 3000 µs.

Wie Figur 5d zeigt, wird mit dem Laserstrahl 7 innerhalb des Entlastungslinienabschnitts 11 in das Material der Innenkontur 1 eine hier ebenfalls kreisförmige und sich entlang des gesamten Umfangs des Konturkreises 5 bzw. des Entlastungslinienkreises 11 (hier lediglich ausschnittsweise gezeigte) erstreckende Abtraglinie 9 einbeschrieben. In Radialrichtung (zum Zentrum der Innenkontur 1 hin gesehen) beträgt der Abstand der Abtraglinie 9 von der Entlastungslinie 11 hier etwa 25% des Abstandes der Entlastungslinie 11 von der außen liegenden Konturlinie 5. Der Abstand 8 der Abtraglinie 9 von der Konturlinie 5 beträgt somit das 1.25-fache des Abstandes der Entlastungslinie 11 von der Konturlinie 5. Die Abtraglinie 9 wird dabei so eingebracht, dass sie die (vom Zentrum der Innenkontur 1 gesehen) innenliegenden Enden der Risslinienabschnitte 6a, 6b, ... noch schneidet.

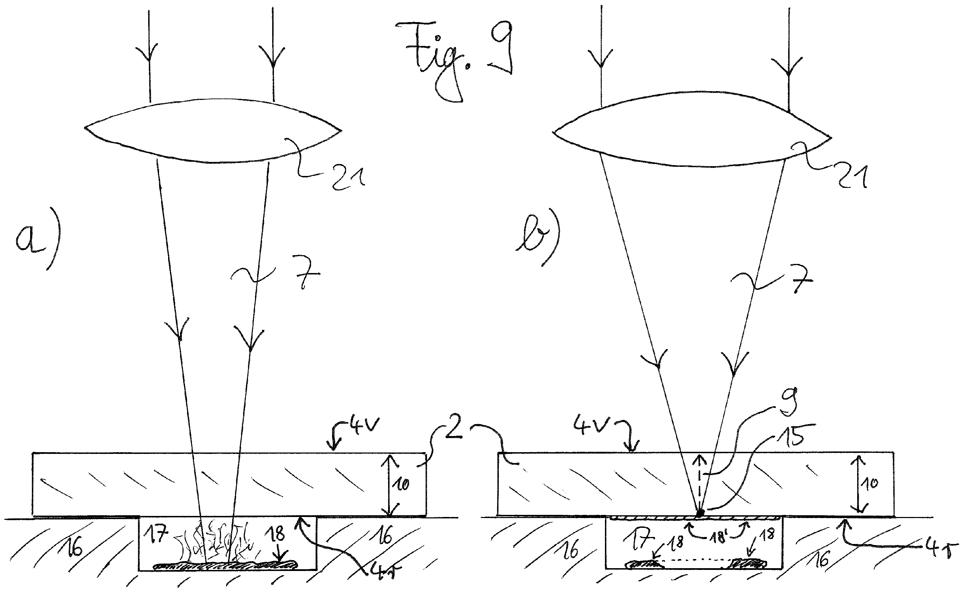

Nach Einbringen der Abtraglinie entlang des gesamten Umfangs der Konturlinie 5 bzw. der Entlastungslinie 11 lösen sich die innerhalb der Abtraglinie 9 im Zentrum der Innenkontur 1 liegenden Materialabschnitte vom Substrat 2, da entlang der Abtraglinie 9 das Substratmaterial über die gesamte Substratdicke 10 abgetragen wird (vgl. Fig. 9). Somit verbleiben vom abzutrennenden Innenkonturmaterial 1 lediglich die zwischen der Abtraglinie 9 und der Konturlinie 5 liegenden Ringabschnitte.

Zwischen dem Rand an der Abtraglinie 9 einerseits und der Konturlinie 5 andererseits entstehen so näherungsweise dreieckförmige Ringabschnitte zwischen den beiden Schenkeln einer jeden V-förmigen Risslinie (siehe Bezugszeichen 1'), die zwar noch mit dem Material benachbarter Ringabschnitte (die hier als noch abzutrennende Konturreste mit dem Bezugszeichen 1r gekennzeichnet sind) verhakt sind, sich jedoch ohne Einbringen gegebenenfalls das Material des verbleibenden Substrats 2 beschädigender Spannungen nach innen herauslösen lassen.

In einem hier nicht gezeigten (nach den Schritten (a) bis (d) durchgeführten) Nachbehandlungsschritt können die verbleibenden, unerwünschten Konturreste 1r (die auch die Spannungsentlastungsabschnitte 1' umfassen) vermittels eines senkrecht zur Substratebene beweglichen mechanischen Stempels vom übrigbleibenden Substrat 2 abgetrennt werden.

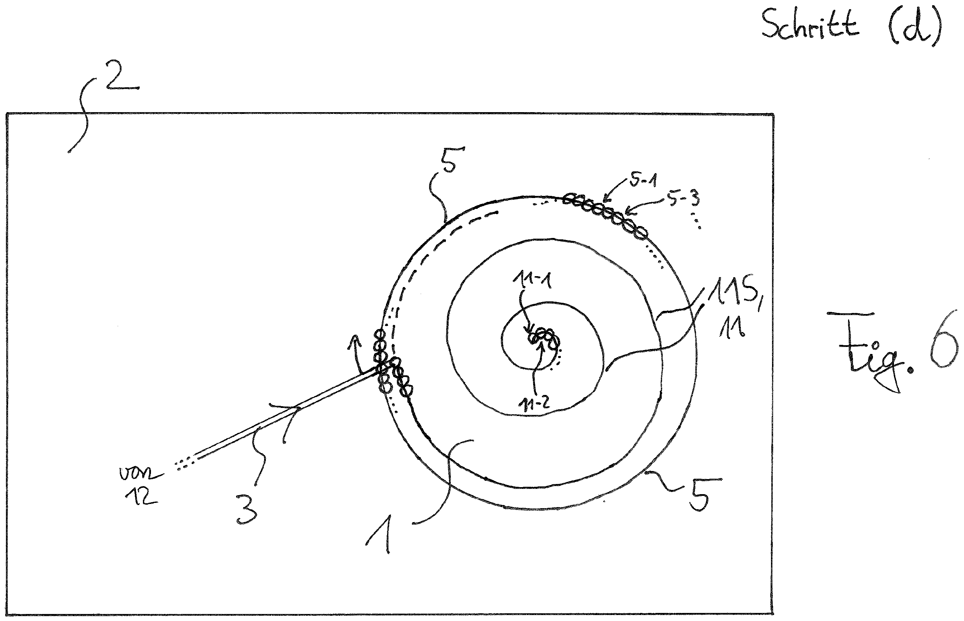

Figur 6 zeigt eine alternative Form des Einbringens eines Entlastungslinienabschnitts 11 in das Substratmaterial der abzutrennenden Innenkontur 1 aus Figur 5a. Anstelle eines einfach umlaufenden, kreisförmigen Entlastungslinienabschnitts 11 kann auch eine den Verlauf der Konturlinie 5 approximierende, vom Zentrum der Innenkontur 1 radial nach außen gesehen ineinandergewunden geführte, hier ca. 3.5-mal umlaufende Entlastungsspirale 11S in das Material der abzutrennenden Innenkontur 2 einbeschrieben werden.

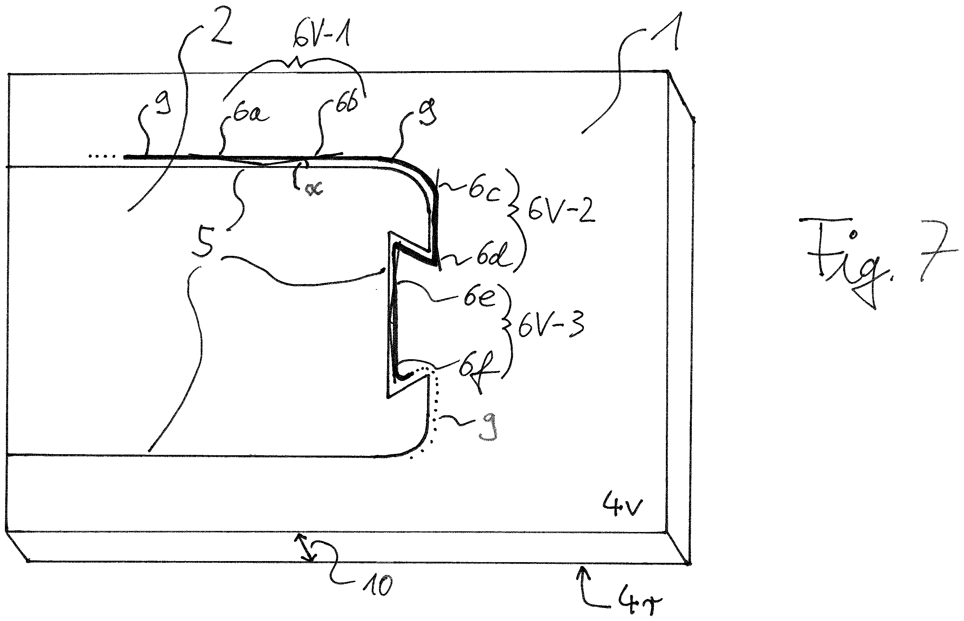

Wie Figur 7 zeigt, kann die vorliegende Erfindung nicht nur zum Abtrennen geschlossener Innenkonturen 1 aus einem Substrat 2 verwendet werden, sondern auch zum Abtrennen komplex geformter Außenkonturen 1, deren Form (vergleiche z.B. den schwalbenschwanzförmigen Abschnitt der Konturlinie 5 in Figur 7) dergestalt ist, dass die Außenkontur 1 vom Substrat 2 mit aus dem Stand der Technik bekannten Verfahren nicht ohne Einbringung von Spannungsrissen in das übrigbleibende Substratmaterial 2 realisiert werden kann. Der Winkel α der beiden gegenüberliegenden Schenkel der hier zwischen der Konturlinie 5 einerseits und der Abtraglinie 9 andererseits liegenden V-förmigen Risslinien 6V-1, 6V-2, ... beträgt hier 10°. In Figur 7 bezeichnen ansonsten identische Bezugszeichen identische bzw. entsprechende Merkmale wie in den Figuren 5a bis 5d. Die Substratdicke senkrecht zur Substratebene ist mit dem Bezugszeichen 10 gekennzeichnet. Die der einfallenden Laserstrahlung 3, 7 zugewandte Substratoberfläche mit dem Bezugszeichen 4v (Substratvorderseite), die gegenüberliegende Substratoberfläche (Substratrückseite) mit dem Bezugszeichen 4r.

Wie Figur 7 zeigt, ist somit ein Einbringen eines den Verlauf der Konturlinie 5 approximierenden Entlastungslinienabschnitts 11 nicht unbedingt notwendig.

Die Erfindung kann somit insbesondere auch zum Abtrennen von Konturen mit Hinterschneidungen verwendet werden.

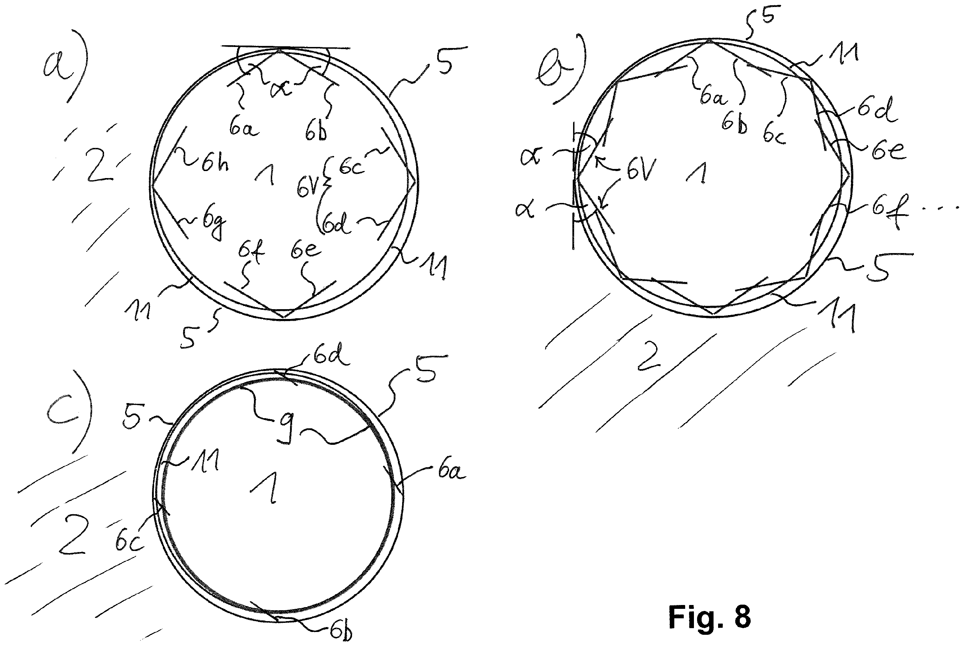

Figur 8 zeigt mehrere unterschiedliche Möglichkeiten, wie entlang des Verlaufs der Konturlinie 5 unterschiedliche, jeweils im Wesentlichen an der Konturlinie 5 beginnende und in das Material der abzutrennenden Kontur 1 hineinführende Risslinienabschnitte 6a, 6b, ... realisiert werden können: Figur 8a zeigt V-förmige Standardrisslinien (siehe auch Figur 5c). Figur 8b zeigt V-förmige Vielfachrisslinien entlang des Konturlinienverlaufs 5, bei denen sich jeweils benachbarte V-förmige Risslinien an den sich zugewandten Schenkeln schneiden. Figur 8c zeigt offene Risslinien durch Einbringen jeweils nur eines Schenkels einer V-förmigen Risslinie.

Figur 9 zeigt wie mit einem zusätzlichen Niederschlagsmaterial 18 (hier: Polyoxymethylen) der nach Einbringen der Abtraglinie 9 vom Substrat 2 bzw. den Konturresten 1r vollständig abgetrennte, innenliegende Materialabschnitt einer abzutrennenden Innenkontur 1 (ggf. auch mit Teilen der unerwünscht noch am Substrat 2 anhaftenden Konturreste 1r) ausgetrieben werden kann. Identische Bezugszeichen bezeichnen in Figur 9 (und auch in Figur 10) wieder die bereits unter diesen Bezugszeichen beschriebenen Merkmale der Erfindung.

Wie Figur 9 zeigt, wird die im Vergleich zum Laserstrahl 3 hohe Strahlleistung des materialabtragenden Laserstrahls 7 über eine (zweite, vergleiche Figur 10) strahlführende optische Einheit 21 auf das Substrat 2 eingekoppelt. Das Substrat 2 wird in einer Spannvorrichtung 16 (z.B. sogenannter Chuck) so gelagert, dass in einem Bereich unterhalb der abzutrennenden Innenkontur 1 auf der Substratrückseite 4r ein gasdichter Hohlraum 17 ausgebildet wird. ("Oben" ist hier die dem einfallenden Laserstrahl zugewandte Substratvorderseite 4v.) In diesen Hohlraum 17 wurde zuvor das Niederschlagsmaterial 18 eingebracht, das nun zu Beginn des gezeigten Materialabtragsschritts (c) durch Fokussieren des Laserstrahls 7 mittels der optischen Einheit 21 durch das Substrat 2 hindurch in den Hohlraum 17 verdampft wird (Fig. 9a). Durch die laserstrahlbedingte Verdampfung schlägt sich das verdampfte Niederschlagsmaterial auf dem im Hohlraum 17 liegenden Abschnitt der Substratrückseite 4r nieder und bildet (Fig. 9b) auf mindestens einer der herauszutrennenden Innenkontur 1 entsprechenden Fläche der Substratrückseite 4r eine die Einkopplung des Laserstrahls 7 in das Substratmaterial verbessernde Einkoppelschicht 18'. Die Verdampfung des Materials 18 zum Niederschlag auf der rückseitigen Oberfläche 4r wird für etwa ... Sekunden durchgeführt. Da das Material des Substrats 2 für die Laserstrahlung λ transparent, das Material der Schicht 18' jedoch für λ opak ist, wird so das Einkoppeln des Strahls 7 in das Substratmaterial verbessert.

Anschließend wird die Laserstrahlung 7 durch die optische Einheit 21 und durch das Substrat hindurch auf die rückseitige Oberfläche 4r fokussiert 15 (vergleiche Figur 9b). Entsprechend der die Abtraglinie 9 kennzeichnenden Geometrie wird der Fokuspunkt 15 der Laserstrahlung 7 durch ein vielfaches Umlaufen des Strahls 7 entlang der Linie 9 sukzessive von der Substratrückseite 4r weg hin zur Substratvorderseite 4v geführt, um über die gesamte Substratdicke 10 gesehen das Substratmaterial entlang der Abtraglinie 9 sukzessive abzutragen bzw. durch die hohe eingebrachte Laserenergie zu verdampfen. Nach der Vielzahl (z.B. 15 mal) von entlang der Kontur der Abtraglinie 9 geführten Umläufen mit zunehmend von der Rückseite 4r zur Vorderseite 4v wanderndem Fokuspunkt 15 wird schließlich das innerhalb der Abtraglinie 9 (die hier zur vereinfachten Darstellung lediglich einfach und mittig über dem Hohlraum 17 eingezeichnet ist) liegende Material der Innenkontur 1 abgelöst und durch den im Hohlraum 17 herrschenden Dampfdruck nach oben ausgetrieben. Bei ausreichend hohem Dampfdruck im Hohlraum 17 kann durch diesen auch die Abtrennung der unerwünschten Konturreste 1r (vergleiche Figur 5d) unterstützt werden.

Figur 10 skizziert eine Vorrichtung zum Durchführen des Verfahrens, die mit einer in einem gemeinsamen Laserkopf ausgebildeten Strahlerzeugungs- und Strahlformungsanordnung 19 versehen ist. Die Einheit 19 umfasst die beiden Laser 12 (zum Erzeugen des die einzelnen Zonen innerer Schädigung mit geringerer Laserintensität erzeugenden Laserstrahls 3) und 14 (zum Erzeugen des materialabtragenden Laserstrahls 7 höherer Intensität) sowie zwei strahlführende optische Einheiten 20 und 21, die jeweils einen einem F-Theta-Objektiv nachgeschalteten Galvanometerscanner zur Strahlablenkung aufweisen (der Aufbau solcher optischer Einheiten ist dem Fachmann bekannt). Die Laserstrahlung 3 des Lasers 12 wird somit über das F-Theta-Objektiv und den Galvanometerscanner der Einheit 20 fokussiert auf die Oberfläche des Substrats 2 geführt und, zum Erzeugen der Konturlinie 5, vermittels des Galvanometerscanners geeignet ausgelenkt. Entsprechend wird die Laserstrahlung 7 des Lasers 14 über das F-Theta-Objektiv und den Galvanometerscanner der Einheit 21 fokussiert auf die Oberfläche des Substrats 2 abgebildet und zum Erzeugen der Abtraglinie 9 durch den Galvanometerscanner der Einheit 21 ausgelenkt.

Alternativ können auch Festoptiken verwendet werden anstelle von Bewegtoptiken verwendet werden (dann wird das Substrat bewegt).

Eine zentrale, hier in Form eines PC 22 mit geeigneten Speichern, Programmen, etc. ausgebildete Steuereinheit steuert die Strahlerzeugung, Strahlfokussierung und Strahlauslenkung mittels der Einheit 19 über eine bidirektionale Daten- und Steuerleitung 23.

Unterschiede der Strahlführungsoptiken 20 und 21 zum Erzeugen der beiden unterschiedlichen Laserstrahlen 3 und 7 sind wie folgt: Der Laserstrahl 7 wird im Vergleich zum Strahl 3 z. B. mit einer korrigierten F-Theta-Linse auf die Oberfläche geführt, was zur Ausbildung eines punktförmigen Fokus führt. Die Brennweite der Linse für den Strahl 7 ist deutlich größer als für den Strahl 3, z. B. 120 mm im Vergleich zu 40 mm.

## Patentansprüche

1. Verfahren zum Erzeugen einer Kontur (1) in einem flächigen Substrat (2) und zum Abtrennen der Kontur (1) vom Substrat (2), insbesondere zum Erzeugen einer Innenkontur (1) in einem flächigen Substrat (2) und zum Heraustrennen der Innenkontur (1) aus dem Substrat (2), wobei
in einem Konturdefinitionsschritt (a) mittels eines über das Substrat (2) geführten Laserstrahls (3) entlang einer die zu erzeugende Kontur (1) kennzeichnenden Konturlinie (5) im Substratmaterial eine Vielzahl einzelner Zonen (5-1, 5-2, ...) innerer Schädigung erzeugt wird, und
in einem nach dem Konturdefinitionsschritt (a) durchgeführten Materialabtrags- und optional zusätzlichen Materialverformschritt (c) mittels eines über das Substrat (2) geführten und optional zusätzlich auf das Substrat (2) eingestrahlten Laserstrahls durch Materialabtrag und optional zusätzlich durch plastische Verformung aus dem Substrat (2) Substratmaterial herausgelöst und/oder vom Substrat (2) Substratmaterial abgelöst wird,
***dadurch gekennzeichnet, dass***
der nach dem Konturdefinitionsschritt (a) durchgeführte Materialabtrags- und optional zusätzliche Materialverformschritt (c) ein(en) Materialabtragsschritt ist oder umfasst, in dem mittels eines über das Substrat (2) geführten, materialabtragenden Laserstrahls (7) entlang einer längs der Konturlinie (5), jedoch beabstandet (8) von dieser sowie in der abzutrennenden Kontur (1) verlaufenden Abtraglinie (9) das Substratmaterial über die gesamte Substratdicke (10) abgetragen wird.

2. Verfahren nach dem vorhergehenden Anspruch
***dadurch gekennzeichnet, dass***
der nach dem Konturdefinitionsschritt (a) durchgeführte Materialabtrags- und optional zusätzliche Materialverformschritt (c) ein(en) Materialverformschritt ist oder umfasst, in dem mittels eines über die abzutrennende Kontur (1) geführten und/oder auf die abzutrennende Kontur (1) eingestrahlten, eine plastische Verformung von Substratmaterial generierenden Laserstrahls, insbesondere eines CO₂-Laserstrahls, Substratmaterial der abzutrennenden Kontur (1) thermisch so verformt wird, dass es sich aus dem Substrat (2) herauslöst und/oder vom Substrat (2) ablöst,
wobei bevorzugt der Materialverformschritt durch den Einsatz einer Gasdüse mit Prozessgas unterstützt wird.

3. Verfahren nach einem der vorhergehenden Ansprüche,
***dadurch gekennzeichnet, dass***
in einem vor dem Materialabtrags- und optional zusätzlichen Materialverformschritt (c) und darüber hinaus bevorzugt auch nach dem Konturdefinitions- schritt (a) durchgeführten Rissdefinitionsschritt (b) mittels eines über das Substrat (2) geführten Laserstrahls (3) entlang mehrerer von der Konturlinie (5) aus gesehen unter einem Winkel α > 0° weg und in die abzutrennende Kontur (1) hinein führenden Risslinienabschnitte (6a, 6b, ...) im Substratmaterial jeweils eine Vielzahl einzelner Zonen (6-1, 6-2, ...) innerer Schädigung erzeugt wird,
wobei die Abtraglinie (9) bevorzugt die Risslinienabschnitte (6a, 6b, ...) schneidet.

4. Verfahren nach dem vorhergehenden Anspruch
***dadurch gekennzeichnet, dass***
in einem vor dem Materialabtrags- und optional zusätzlichen Materialverformschritt und bevorzugt zwischen dem Konturdefinitionsschritt (a) und dem Rissdefinitionsschritt (b) durchgeführten Spannungsentlastungsschritt mittels eines über das Substrat (2) geführten Laserstrahls (3) entlang mindestens eines in der abzutrennende Kontur (1) verlaufenden, den Verlauf der Konturlinie (5) approximierenden Entlastungslinienab- schnitts (11) im Substratmaterial jeweils eine Vielzahl einzelner Zonen (11-1, 11-2, ...) innerer Schädigung erzeugt wird.

5. Verfahren nach einem der Ansprüche 3 oder 4,
***dadurch gekennzeichnet, dass***
in einem nach dem Materialabtrags- und optional zusätzlichen Materialverformschritt (c) durchgeführten Nachbehandlungsschritt zum vollständigen Abtrennen der Kontur (1) vom Substrat (2)
eventuell noch mit dem Substrat (2) verbundene Reste (1r) der Kontur (1) durch thermisches Behandeln dieser Konturreste (1r) und/oder des Substrats (2), insbesondere durch lokal inhomogene Erwärmung durch zumindest abschnittsweises Führen eines CO₂-Laserstrahls über die Konturlinie (5), die Risslinienabschnitte (6a, 6b, ...) und/oder den Entlastungslinienabschnitt (11), vom Substrat (2) abgetrennt werden
und/oder
solche Konturreste (1r) durch Ultraschallbehandeln der Konturreste (1r) und/oder des Substrats (2) vom Substrat (2) abgetrennt werden
und/oder
solche Konturreste (1r) durch Ausüben mechanischer Kräfte, bevorzugt mittels eines senkrecht zur Substratebene beweglichen Stempels, auf die Konturreste (1r) vom Substrat (2) abgetrennt werden.

6. Verfahren nach einem der Ansprüche 3 bis 5,
***dadurch gekennzeichnet, dass***
die Zonen (5-1, 5-2, ..., 6-1, 6-2, ..., 11-1, 11-2, ...) innerer Schädigung ohne Ablation und ohne Aufschmelzen von Substratmaterial erzeugt werden.

7. Verfahren nach einem der Ansprüche 3 bis 6,
***dadurch gekennzeichnet, dass***
zumindest einzelne der Zonen (5-1, 5-2, ..., 6-1, 6-2, ..., 11-1, 11-2, ...) innerer Schädigung durch punktförmiges Fokussieren des Laserstrahls (3) in das Innere des Substratmaterials am Ort der jeweiligen Zone erzeugt werden, bevorzugt durch mehrfaches punktförmiges Fokussieren in unterschiedlicher Substrattiefe am Ort der jeweiligen Zone erzeugt werden,
und/oder
dass zumindest einzelne der Zonen (5-1, 5-2, ..., 6-1, 6-2, ..., 11-1, 11-2, ...) innerer Schädigung erzeugt werden, indem im Substratmaterial längs eines in Strahlrichtung des Laserstrahls (3) gesehen ausgedehnten Abschnitts (3c) einer Laserstrahlbrennlinie (3b) eine induzierte Absorption erzeugt wird, durch die entlang dieses ausgedehnten Abschnitts (3c) eine induzierte Rissbildung im Substratmaterial erfolgt.

8. Verfahren nach einem der Ansprüche 3 oder 4,
***dadurch gekennzeichnet, dass***
im Rissdefinitionsschritt (b) eine V-förmige Risslinie (6V) erzeugt wird, indem entlang zweier von ein und demselben Ort auf der Konturlinie (5) unter demselben Winkel α > 0° von der Konturlinie (5) weg führender, jedoch in längs der Konturlinie (5) gesehen entgegengesetzten Richtungen in die abzutrennende Kontur (1) hinein führender Risslinienabschnitte (6a, 6b) im Substratmaterial jeweils eine Vielzahl einzelner Zonen (6-1, 6-2, ...) innerer Schädigung erzeugt wird,
wobei bevorzugt längs der Konturlinie (5) gesehen beabstandet voneinander mehrere derartige V-förmige Risslinien (6V-1, 6V-2, ...) erzeugt werden, insbesondere über die gesamte Länge der geschlossenen Konturlinie (5) einer herauszutrennenden Innenkontur (1) erzeugt werden,
und/oder
wobei der Winkel α bevorzugt zwischen 20° und 40°, bevorzugt 30° beträgt.

9. Verfahren nach Anspruch 4
***dadurch gekennzeichnet, dass***
im Spannungsentlastungsschritt (d) eine Entlastungsspirale (11S) erzeugt wird, indem entlang eines sich der geschlossenen Konturlinie (5) einer herauszutrennenden Innenkontur (1) vom Zentrum der herauszutrennenden Innenkontur (1) zum äußeren Rand dieser Innenkontur (1) hin gesehen spiralförmig nähernden Entlastungslinienabschnitts (11) eine Vielzahl einzelner Zonen (11-1, 11-2, ...) innerer Schädigung erzeugt wird.

10. Verfahren nach einem der Ansprüche 3 oder 4,
***dadurch gekennzeichnet, dass***
im Konturdefinitionsschritt (a), im Rissdefinitionsschritt (b) und/oder im Spannungsentlastungsschritt (d) Laserstrahlen (3) identischer Strahleigenschaften über das Substrat (2) geführt werden und/oder dass diese Laserstrahlen (3) durch ein und denselben Laser (12) erzeugt und vermittels ein und derselben Strahlformungsoptik (20) auf das Substrat (2) eingestrahlt werden,
und/oder
dass die Wellenlänge λ eines mindestens einen dieser Laserstrahlen (3) erzeugenden Lasers (12) so gewählt wird, dass das Substratmaterial für diese Wellenlänge transparent ist oder im wesentlichen transparent ist, wobei unter letzterem verstanden wird, dass die längs der Strahlrichtung erfolgte Intensitätsabnahme des Laserstrahls im Substratmaterial je Millimeter Eindringtiefe 10% oder weniger beträgt, wobei bevorzugt, beispielsweise für ein im sichtbaren Wellenlängenbereich transparentes Glas- oder Kristallelement als Substrat (2), ein Nd:YAG Laser (12) mit einer Wellenlänge λ von 1064 nm oder ein Y:YAG Laser mit einer Wellenlänge λ von 1030 nm zum Erzeugen mindestens eines dieser Laserstrahlen (3) eingesetzt wird,
und/oder
dass der mittlere Durchmesser δ mindestens eines dieser Laserstrahlen (3) beim Auftreffen auf die bestrahlte Oberfläche des Substrats (2), also der Spotdurchmesser δ, zwischen 0.5 µm und 5 µm, bevorzugt zwischen 1 µm und 3 µm, bevorzugt 2 µm beträgt,
und/oder
dass die Impulsdauer τ eines mindestens einen dieser Laserstrahlen (3) erzeugenden Lasers (12) so gewählt wird, dass innerhalb der Wechselwirkungszeit mit dem Substratmaterial die Wärmediffusion im Substratmaterial vernachlässigbar ist, bevorzugt keine Wärmediffusion erfolgt, wozu bevorzugt τ, δ und die Wärmediffusionskonstante β des Substratmaterials gemäß τ << δ₂/β eingestellt werden und/oder bevorzugt τ kleiner als 10 ns, bevorzugt kleiner als 100 ps, gewählt wird,
und/oder
dass die Pulswiederholfrequenz eines mindestens einen dieser Laserstrahlen (3) erzeugenden Lasers (12) zwischen 10 kHz und 1000 kHz, bevorzugt 100 kHz, beträgt,
und/oder
dass ein mindestens einen dieser Laserstrahlen (3) erzeugender Laser (12) als Einzelpulslaser oder als Burstimpulslaser betrieben wird,
und/oder
dass die mittlere Laserleistung, gemessen unmittelbar strahlausgangsseitig eines mindestens einen dieser Laserstrahlen (3) erzeugenden Lasers (12), zwischen 10 Watt und 100 Watt, bevorzugt zwischen 30 Watt und 50 Watt, beträgt.

11. Verfahren nach einem der vorhergehenden Ansprüche,
***dadurch gekennzeichnet, dass***
im Materialabtragsschritt, beispielsweise für ein im sichtbaren Wellenlängenbereich transparentes Glas- oder Kristallelement als Substrat (2), ein Nd:YAG Laser (14) mit einer Wellenlänge λ von 1064 nm oder
ein Y:YAG Laser (14) mit einer Wellenlänge λ von 1030 nm zum Erzeugen des materialabtragenden Laserstrahls (7) eingesetzt wird,
und/oder
dass der mittlere Durchmesser des materialabtragenden Laserstrahls (7) beim Auftreffen auf die bestrahlte Oberfläche des Substrats (2), also sein Spotdurchmesser, zwischen 5 µm und 200 µm, bevorzugt zwischen 10 µm und 100 µm, beträgt,
und/oder
dass die Pulswiederholfrequenz des den materialabtragenden Laserstrahl (7) erzeugenden Lasers (14) zwischen 0.1 kHz und 200 kHz, bevorzugt zwischen 0.2 kHz und 100 kHz, beträgt,
und/oder
dass der den materialabtragenden Laserstrahl (7) erzeugende Laser (14) als Einzelpulslaser oder als Burstimpulslaser betrieben wird,
und/oder
dass die mittlere Laserleistung, gemessen unmittelbar strahlausgangsseitig des den materialabtragenden Laserstrahl (7) erzeugenden Lasers (14), zwischen 10 Watt und 200 Watt, bevorzugt zwischen 20 Watt und 100 Watt, beträgt.

12. Verfahren nach einem der vorhergehenden Ansprüche,
***dadurch gekennzeichnet, dass***
der Materialabtragsschritt wie folgt durchgeführt wird:
die Wellenlänge des materialabtragenden Laserstrahls (7) wird so gewählt, dass das Substratmaterial für diese transparent oder im Wesentlichen transparent ist,
der materialabtragende Laserstrahl (7) wird durch das Substrat (2) hindurch in einen auf der der strahleinfallsseitigen Substratoberfläche (Substratvorderseite 4v) abgewandten Substratrückseite (4r) liegenden Fokuspunkt (15) fokussiert und
die materialabtragende Laserstrahlung (7) wird unter sukzessivem Verschieben des Fokuspunkts (15) von der Substratrückseite (4r) zur Substratvorderseite (4v) hin mehrfach entlang der Abtraglinie (9) geführt, um das Substratmaterial über die gesamte Substratdicke (10) abzutragen.

13. Verfahren nach dem vorhergehenden Anspruch
***dadurch gekennzeichnet, dass***
vor dem Beginn des Materialabtragsschritts folgendes durchgeführt wird:
zunächst wird das Substrat (2) mittels einer Lagerung (16) so gelagert, dass sich im Bereich der abzutrennenden Kontur (1) zwischen der Substratrückseite (4r) und der Lagerung (16) ein gasdichter Hohlraum (17) ausbildet, und anschließend wird ein Niederschlagsmaterial (18), das vor dem Lagern des Substrats (2) so positioniert worden ist, dass es sich nach dem Lagern des Substrats (2) im Hohlraum (17) befindet, verdampft, indem ein Laserstrahl (3, 7) in den Hohlraum (17) und darüber hinaus bevorzugt auch auf das Niederschlagsmaterial (18) fokussiert wird.

14. Verfahren nach einem der vorhergehenden Ansprüche
***dadurch gekennzeichnet, dass***
die Kontur (1) in einem flächigen Glaselement, insbesondere in einer Scheibe aus gehärtetem Glas oder aus ungehärtetem Glas, oder in einem flächigen Kristallelement als Substrat (2) erzeugt und davon abgetrennt wird.

15. Vorrichtung zum Erzeugen einer Kontur (1) in einem flächigen Substrat (2) und zum Abtrennen der Kontur (1) vom Substrat (2), insbesondere zum Erzeugen einer Innenkontur (1) in einem flächigen Substrat (2) und zum Heraustrennen der Innenkontur (1) aus dem Substrat (2) mit einer zentralen Steuereinheit (22) und
einer Strahlerzeugungs- und Strahlformungsanordnung (19), deren Strahlerzeugung, Strahlfokussierung und Strahlauslenkung mittels der zentralen Steuereinheit (22) so gesteuert ist,
dass in einem Konturdefinitionsschritt (a) mittels eines über das Substrat (2) geführten Laserstrahls (3) entlang einer die zu erzeugende Kontur (1) kennzeichnenden Konturlinie (5) im Substratmaterial eine Vielzahl einzelner Zonen (5-1, 5-2, ...) innerer Schädigung erzeugt wird, und
dass in einem nach dem Konturdefinitionsschritt (a) durchgeführten Materialabtrags- und optional zusätzlichen Materialverformschritt (c) mittels eines über das Substrat (2) geführten und optional zusätzlich auf das Substrat (2) eingestrahlten Laserstrahls durch Materialabtrag und optional zusätzlich durch plastische Verformung aus dem Substrat (2) Substratmaterial herausgelöst wird und/oder vom Substrat (2) Substratmaterial abgelöst wird,
***dadurch gekennzeichnet, dass***
die Strahlerzeugung, Strahlfokussierung und Strahlauslenkung der Strahlerzeugungs- und Strahlformungsanordnung (19) mittels der zentralen Steuereinheit (22) so gesteuert ist,
dass der nach dem Konturdefinitionsschritt (a) durchgeführte Materialabtrags- und optional zusätzliche Materialverformschritt (c) ein(en) Materialabtragsschritt ist oder umfasst, in dem mittels eines über das Substrat (2) geführten, materialabtragenden Laserstrahls (7) entlang einer längs der Konturlinie (5), jedoch beabstandet (8) von dieser sowie in der abzutrennenden Kontur (1) verlaufenden Abtraglinie (9) das Substratmaterial über die gesamte Substratdicke (10) abgetragen wird.

16. Vorrichtung nach dem vorhergehenden Anspruch
***dadurch gekennzeichnet, dass***
die Strahlerzeugungs- und Strahlformungsanordnung (19) umfasst:
einen den im Konturdefinitionsschritt (a) und optional zusätzlich in einem Rissdefinitionsschritt (b) und optional zusätzlich einem Spannungsentlastungsschritt (d) zu führenden Laserstrahl (3) erzeugenden ersten Laser (12), einen den im Materialabtrags- und optional zusätzlichen Materialverformschritt (c) zu führenden und optional zusätzlich einzustrahlenden Laserstrahl, insbesondere den im Materialabtragsschritt zu führenden materialabtragenden Laserstrahl (7), erzeugenden zweiten Laser (14),
eine erste strahlführende optische Einheit (20), mit der im Konturdefinitionsschritt (a), im Rissdefinitionsschritt (b) und/oder im Spannungsentlastungsschritt (d) der mit dem ersten Laser (12) erzeugte Laserstrahl (3) über das Substrat (2) führbar ist, und eine zweite strahlführende optische Einheit (21), mit der im Materialabtrags- und optional zusätzlichen Materialverformschritt (c) der mit dem zweiten Laser (14) erzeugte Laserstrahl, insbesondere der materialabtragende Laserstrahl (7), über das Substrat (2) führbar und optional zusätzlich auf das Substrat (2) einstrahlbar ist.

17. Vorrichtung nach dem vorvorhergehenden Anspruch bei Ausgestaltung der Vorrichtung zum Durchführen eines Verfahrens nach Verfahrensanspruch 1,
***dadurch gekennzeichnet, dass***
die Strahlerzeugungs- und Strahlformungsanordnung (19) umfasst:
einen einerseits den im Konturdefinitionsschritt (a) und optional zusätzlich in einem Rissdefinitionsschritt (b) und optional zusätzlich einem Spannungsentlastungsschritt (d) zu führenden Laserstrahl (3) und andererseits auch den im Materialabtragsschritt zu führenden, materialabtragenden Laserstrahl (7) erzeugenden Laser,
eine erste strahlführende optische Einheit (20), mit der im Konturdefinitionsschritt (a), im Rissdefinitionsschritt (b) und/oder im Spannungsentlastungsschritt (d) der mit diesem Laser erzeugte Laserstrahl (3) über das Substrat (2) führbar ist, und
eine zweite strahlführende optische Einheit (21), mit der im Materialabtragsschritt der mit diesem Laser erzeugte materialabtragende Laserstrahl (7) über das Substrat (2) führbar ist.

## Claims

1. Method for producing a contour (1) in a planar substrate (2) and for separating the contour (1) from the substrate (2), in particular for producing an internal contour (1) in a planar substrate (2) and for removing the internal contour (1) from the substrate (2),
wherein
in a contour definition step (a) by means of a laser beam (3) guided over the substrate (2) along a contour line (5) characterising the contour (1) to be produced, a large number of individual zones (5-1, 5-2, ...) of internal damage is produced in the substrate material, and
in a material removal- and optional additional material deformation step (c) performed after the contour definition step (a) by means of a laser beam guided over the substrate (2) and optionally additionally radiated onto the substrate (2), substrate material is removed from the substrate (2) and/or substrate material is detached from the substrate (2) by material removal and optionally additionally by plastic deformation,
**characterized in that**
the material removal- and optional additional material deformation step (c) performed after the contour definition step (a) is or comprises a material removal step, in which, by means of a material-removing laser beam (7) guided over the substrate (2) along a removal line (9) which extends along the contour line (5) but at a spacing (8) from the latter and also in the contour (1) to be separated, the substrate material is removed over the entire substrate thickness (10).

2. Method according to the preceding claim,
***characterised in that***
the material removal- and optional additional material deformation step (c) performed after the contour definition step (a) is or comprises a material deformation step in which, by means of a laser beam guided over the contour (1) to be separated and/or radiated onto the contour (1) to be separated and generating a plastic deformation of substrate material, in particular a CO₂ laser beam, substrate material of the contour (1) to be separated is thermally deformed such that it is removed from the substrate (2) and/or detached from the substrate (2),
preferably the material deformation step being assisted by the use of a gas nozzle with process gas.

3. Method according to one of the preceding claims,
***characterised by***
in a crack definition step (b) performed before the material removal- and optional additional material deformation step (c) and furthermore preferably also after the contour definition step (a) by means of a laser beam (3) which is guided over the substrate (2), along a plurality of crack line portions (6a, 6b, ...) which, viewed from the contour line (5), lead away at an angle α > 0° and into the contour (1) to be separated, respectively a large number of individual zones (6-1, 6-2, ...) of internal damage is produced in the substrate material,
the removal line (9) crossing the crack line portions (6a, 6b, ...).

4. Method according to the preceding claim,
***characterised in that***
in a stress-relieving step (d) performed before the material removal- and optional additional material deformation step (c) and preferably between the contour definition step (a) and the crack definition step (b) by means of a laser beam (3) which is guided over the substrate (2), along at least one stress-relieving line portion (11), which extends in the contour (1) to be separated and approximates to the course of the contour line (5), respectively a large number of individual zones (11-1, 11-2, ...) of internal damage is produced in the substrate material.

5. Method according to one of claims 3 or 4,
***characterised in that***
in an aftertreatment step performed after the material removal- and optional additional material deformation step (c), for the complete separation of the contour (1) from the substrate (2),
remains (1r) of the contour (1) which are still possibly connected to the substrate (2) are separated from the substrate (2) by thermal treatment of these contour remains (1r) and/or of the substrate (2), in particular by locally non-homogeneous heating by guidance of a CO₂ laser beam, at least in portions, over the contour line (5), the crack line portions (6a, 6b, ...) and/or the stress-relieving line portion (11),
and/or
such contour remains (1r) are separated from the substrate (2) by ultrasonic treatment of the contour remains (1r) and/or of the substrate (2)
and/or
such contour remains (1r) are separated from the substrate (2) by exerting mechanical forces, preferably by means of a stamp which is moveable perpendicular to the substrate plane, towards the contour remains (1r).

6. Method according to one of claims 3 to 5,
***characterised in that***
the zones (5-1, 5-2, ... 6-1, 6-2, ..., 11-1, 11-2, ...) of internal damage are produced without ablation and without melting of substrate material.

7. Method according to one of claims 3 to 6,
***characterised in that***
at least some of the zones (5-1, 5-2, ..., 6-1, 6-2, ..., 11-1, 11-2, ...) of internal damage are produced by point-shaped focusing of the laser beam (3) into the interior of the substrate material at the place of the respective zone, preferably by multiple point focusing at different substrate depths at the place of the respective zone,
and/or
**in that** at least some of the zones (5-1, 5-2, ..., 6-1, 6-2, ..., 11-1, 11-2, ...) of internal damage are produced by an induced absorption being produced in the substrate material along, viewed in the beam direction of the laser beam (3), an extended portion (3c) of a laser beam focal line (3b), by means of which absorption an induced crack formation along this extended portion (3c) is effected in the substrate material.

8. Method according to one of claims 3 or 4,
***characterised in that***
a V-shaped crack line (6V) is produced in the crack definition step (b) by producing, along two crack line portions (6a, 6b) which lead from one and the same place on the contour line (5) at the same angle α > 0° away from the contour line (5), but, viewed along the contour line (5), in opposite directions into the contour (1) to be separated, respectively a large number of individual zones (6-1, 6-2, ...) of internal damage in the substrate material,
preferably, viewed along the contour line (5), a plurality of such V-shaped crack lines (6V-1, 6V-2, ...) being produced at a spacing from each other, in particular being produced over the entire length of the closed contour line (5) of an internal contour (1) to be separated,
and/or
the angle α being preferably between 20° and 40°, preferably 30°.

9. Method according to claim 4,
***characterised in that***
a stress-relieving spiral (11S) is produced in the stress-relieving step (d) by, along a stress-relieving line portion (11) which approaches, in a spiral, the closed contour line (5) of an internal contour (1) to be removed, viewed from the centre of the internal contour (1) to be removed to the external edge of this internal contour (1), a large number of individual zones (11-1, 11-2, ...) of internal damage being produced.

10. Method according to one of claims 3 or 4,
***characterised in that***
in the contour definition step (a), in the crack definition step (b) and/or in the stress-relieving step (d), laser beams (3) of identical beam properties are guided over the substrate (2) and/or **in that** these laser beams (3) are produced by one and the same laser (12) and are radiated onto the substrate (2) by means of one and the same beam-forming lens system (20),
and/or
**in that** the wavelength λ of a laser (12) producing at least one of these laser beams (3) is chosen such that the substrate material is transparent or is essentially transparent for this wavelength, there being understood by the latter that the intensity reduction of the laser beam, effected along the beam direction, in the substrate material is, per millimetre of penetration depth, 10% or less, preferably, for example for a glass- or crystal element as substrate (2) which is transparent in the visible wavelength range, an Nd:YAG laser (12) with a wavelength λ of 1,064 nm or a Y:YAG laser (12) with a wavelength λ of 1,030 nm being used for producing at least one of these laser beams (3),
and/or
**in that** the average diameter δ of at least one of these laser beams (3), when impinging on the irradiated surface of the substrate (2), i.e. the spot diameter δ, is between 0.5 µm and 5 µm, preferably between 1 µm and 3 µm, preferably 2 µm,
and/or
**in that** the pulse duration τ of a laser (12) producing at least one of these laser beams (3) is chosen such that, within the interaction time with the substrate material, the heat diffusion in the substrate material is negligible, preferably no heat diffusion is effected, for which purpose preferably τ, δ and the heat diffusion constant β of the substrate material are adjusted according to τ << δ₂/β and/or preferably τ is chosen to be less than 10 ns, preferably less than 100 ps,
and/or
**in that** the pulse repetition frequency of a laser (12) producing at least one of these laser beams (3) is between 10 kHz and 1,000 kHz, preferably 100 kHz,
and/or
**in that** a laser (12) producing at least one of these laser beams (3) is operated as single pulse laser or as burst pulse laser,
and/or
**in that** the average laser power, measured directly at the beam output side of a laser (12) producing at least one of these laser beams (3), is between 10 watts and 100 watts, preferably between 30 watts and 50 watts.

11. Method according to one of the preceding claims,
***characterised in that***
in the material removal step, for example for a glass- or crystal element as substrate (2) which is transparent in the visible wavelength range, an Nd:YAG laser (14) with a wavelength λ of 1,064 nm, or a Y:YAG laser (14) with a wavelength λ of 1,030 nm is used for producing the material-removing laser beam (7),
and/or
**in that** the average diameter of the material-removing laser beam (7), when impinging on the irradiated surface of the substrate (2), i.e. its spot diameter, is between 5 µm and 200 µm, preferably between 10 µm and 100 µm,
and/or
**in that** the pulse repetition frequency of the laser (14) producing the material-removing laser beam (7) is between 0.1 kHz and 200 kHz, preferably between 0.2 kHz and 100 kHz,
and/or
**in that** the laser (14) producing the material-removing laser beam (7) is operated as single pulse laser or as burst impulse laser,
and/or
**in that** the average laser power, measured directly at the beam output side of the laser (14) producing the material-removing laser beam (7), is between 10 watts and 200 watts, preferably between 20 watts and 100 watts.

12. Method according to one of the preceding claims,
***characterised in that***
the material removal step is implemented as follows:
the wavelength of the material-removing laser beam (7) is chosen such that the substrate material is transparent or essentially transparent for this,
the material-removing laser beam (7) is focused through the substrate (2) into a focal point (15) situated on the substrate rear-side (4r) which is orientated away from the beam incidence side substrate surface (substrate front-side 4v) and
the material-removing laser radiation (7) is guided several times along the removal line (9) with successive displacement of the focal point (15) from the substrate rear-side (4r) towards the substrate front-side (4v) in order to remove the substrate material over the entire substrate thickness (10).

13. Method according to the preceding claim,
***characterised in that***
the following is performed before beginning the material removal step:
firstly, the substrate (2) is mounted by means of a mounting (16) such that, in the region of the contour (1) to be separated between the substrate rear-side (4r) and the mounting (16), a gas-sealed cavity (17) is formed, and
subsequently, a precipitation material (18), which has been positioned before mounting of the substrate (2) such that it is situated in the cavity (17) after mounting of the substrate (2), is vaporised, by a laser beam (3, 7) being focused into the cavity (17) and furthermore preferably also onto the precipitation material (18).

14. Method according to one of the preceding claims,
***characterised in that***
the contour (1) is produced in a planar glass element, in particular in a disc made of hardened glass or of unhardened glass, or in a planar crystal element as substrate (2) and is separated therefrom.

15. Device for producing a contour (1) in a planar substrate (2) and for separating the contour (1) from the substrate (2), in particular for producing an internal contour (1) in a planar substrate (2) and for removing the internal contour (1) from the substrate (2), having
a central control unit (22) and
a beam-producing- and beam-forming arrangement (19) of which the beam production, beam focusing and beam deflection is controlled with the central control unit (22) in such a manner,
that in a contour definition step (a) by means of a laser beam (3) guided over the substrate (2) along a contour line (5) characterising the contour (1) to be produced, a large number of individual zones (5-1, 5-2, ...) of internal damage in the substrate material is produced, and
that in a material removal- and optional additional material deformation step (c) performed after the contour definition step (a) by means of a laser beam guided over the substrate (2) and optionally additionally radiated onto the substrate (2), substrate material is removed from the substrate (2) and/or substrate material is detached from the substrate (2) by material removal and optionally additionally by plastic deformation,
**characterized in that**
the beam production, beam focusing and beam deflection of the beam-producing- and beam-forming arrangement (19) is controlled by the central control unit (22) in such a manner,
the material removal- and optional additional material deformation step (c) performed after the contour definition step (a) is or comprises a material removal step, in which, by means of a material-removing laser beam (7) guided over the substrate (2) along a removal line (9) which extends along the contour line (5) but at a spacing (8) from the latter and also in the contour (1) to be separated, the substrate material is removed over the entire substrate thickness (10).

16. Device according to the preceding claim,
***characterised in that***
the beam-producing- and beam-forming arrangement (19) comprises:
a first laser (12) producing the laser beam (3) to be guided in the contour definition step (a), and optionally additionally in the crack definition step (b) and optionally additionally in the stress-relieving step (d),
a second laser (14) producing the material-removing laser beam (7) to be guided and optionally additionally to be radiated in the material removal- and optional additional material deformation step (c), in particular the laser beam (7) to be guided in the material removal step,
a first beam-guiding optical unit (20) with which, in the contour definition step (a), in the crack definition step (b) and/or in the stress-relieving step (d), the laser beam (3) produced with the first laser (12) can be guided over the substrate (2), and
a second beam-guiding optical unit (21) with which, in the material removal- and optional additional material deformation step (c), the laser beam produced with the second laser (14), in particular the material-removing laser beam (7), can be guided over the substrate (2) and optionally additionally radiated onto the substrate (2).

17. Device according to the preceding claim with a configuration of the device for implementing a method according to method claim 1,
***characterised in that***
the beam-producing- and beam-forming arrangement (19) comprises:
a laser producing, on the one hand, the laser beam (3) to be guided in the contour definition step (a), and optionally additionally in the crack definition step (b) and optionally additionally in a stress-relieving step (d) and, on the other hand, also the material-removing laser beam (7) to be guided in the material removal step,
a first beam-guiding optical unit (20) with which, in the contour definition step (a), in the crack definition step (b) and/or in the stress-relieving step (d), the laser beam (3) produced with this laser can be guided over the substrate (2), and
a second beam-guiding optical unit (21) with which, in the material removal step, the material-removing laser beam (7) produced with this laser can be guided over the substrate (2).

## Revendications

1. Procédé pour réaliser un contour (1) dans un substrat (2) plan et pour séparer le contour (1) du substrat (2), en particulier pour réaliser un contour intérieur (1) dans un substrat (2) plan et pour extraire le contour intérieur (1) du substrat (2),
dans lequel, dans une étape de définition de contour (a), au moyen d'un faisceau laser (3) guidé au-dessus du substrat (2) le long d'une ligne de contour (5) caractérisant le contour (1) à réaliser, une multiplicité de zones (5-1, 5-2, ...) de détérioration interne est réalisée dans le matériau du substrat et,
dans une étape d'enlèvement de matériau et optionnellement en plus de déformation de matériau (c) effectuée après l'étape de définition de contour (a), au moyen d'un faisceau laser guidé au-dessus du substrat (2) et optionnellement émis à titre supplémentaire sur le substrat (2), du matériau du substrat est arraché du substrat (2) par enlèvement de matériau et optionnellement à titre supplémentaire par déformation plastique, et/ou du matériau du substrat est détaché du substrat (2),
**caractérisé en ce que**
l'étape d'enlèvement de matériau et optionnellement en plus de déformation de matériau (c) effectuée après l'étape de définition de contour (a) est ou comprend une étape d'enlèvement de matériau dans laquelle, au moyen d'un faisceau laser (7) enleveur de matériau guidé au-dessus du substrat (2) le long d'une ligne d'enlèvement (9) placée le long de la ligne de contour (5), mais à distance (8) de celle-ci, ainsi que dans le contour (1) à séparer, le matériau du substrat est enlevé sur toute l'épaisseur de substrat (10).

2. Procédé selon la revendication précédente,
**caractérisé en ce que**
l'étape d'enlèvement de matériau et optionnellement en plus de déformation de matériau (c) effectuée après l'étape de définition de contour (a) est ou comprend une étape de déformation de matériau dans laquelle, au moyen d'un faisceau laser guidé au-dessus du contour (1) à séparer et/ou émis sur le contour (1) à séparer, générant une déformation plastique du matériau du substrat, en particulier d'un faisceau laser CO₂, du matériau du substrat du contour (1) à séparer est thermiquement déformé de telle sorte qu'il s'arrache du substrat (2) et/ou de détache du substrat (2),
dans lequel l'étape de déformation de matériau est de préférence assistée par la mise en œuvre d'une buse de gaz avec gaz de traitement.

3. Procédé selon l'une des revendications précédentes,
**caractérisé en ce que**,
dans une étape de définition de fissure (b) effectuée avant l'étape d'enlèvement de matériau et optionnellement en plus de déformation de matériau (c), et en outre de préférence également après l'étape de définition de contour (a), au moyen d'un faisceau laser (3) guidé au-dessus du substrat (2) le long de plusieurs segments de ligne de fissure (6a, 6b , ...) pénétrant dans le contour à séparer (1) et s'éloignant de la ligne de contour (5) vue sous un angle α > 0°, une multiplicité de zones (6-1, 6-2, ...) de détérioration interne est réalisée dans le matériau du substrat,
dans lequel la ligne d'enlèvement (9) coupe de préférence les segments de ligne de fissure (6a, 6b , ...).

4. Procédé selon la revendication précédente,
**caractérisé en ce que**,
dans une étape de décharge de tension effectuée avant l'étape d'enlèvement de matériau et optionnellement en plus de déformation de matériau, et de préférence entre l'étape de définition de contour (a) et l'étape de définition de fissure (b), au moyen d'un faisceau laser (3) guidé au-dessus du substrat (2) le long d'au moins un segment de ligne de décharge (11) placé dans le contour (1) à séparer et s'approchant du tracé du la ligne de contour (5), une multiplicité de zones (11-1, 11-2, ...) de détérioration interne est réalisée dans le matériau du substrat.

5. Procédé selon l'une des revendications 3 ou 4,
**caractérisé en ce que**,
dans une étape de traitement ultérieur effectuée après l'étape d'enlèvement de matériau et optionnellement en plus de déformation de matériau (c) pour la séparation complète du contour (1) par rapport au substrat (2),
des restes (1r) de contour (1) éventuellement encore reliés au substrat (2) sont séparés du substrat (2) par un traitement thermique de ces restes (1r) de contour et/ou du substrat (2), en particulier par un chauffage localement inhomogène par le guidage au moins par tronçons d'un faisceau laser CO₂ au-dessus de la ligne de contour (5), des segments de ligne de fissure (6a, 6b , ...) et/ou du segment de ligne de décharge (11),
et/ou
de tels restes (1r) de contour sont séparés du substrat (2) par un traitement aux ultrasons des restes (1r) de contour et/ou du substrat (2),
et/ou
de tels restes de contour (1r) sont séparés du substrat (2) par l'exercice de forces mécaniques, de préférence au moyen d'un poinçon mobile perpendiculairement au plan du substrat, sur les restes (1r) de contour.

6. Procédé selon l'une des revendications 3 à 5,
**caractérisé en ce que**
les zones (5-1, 5-2, ..., 6-1, 6-2, ..., 11-1, 11-2, ...) de détérioration interne sont réalisées sans ablation et sans fusion de matériau du substrat.

7. Procédé selon l'une des revendications 3 à 6,
**caractérisé en ce que**
au moins certaines des zones (5-1, 5-2, ..., 6-1, 6-2, ..., 11-1, 11-2, ...) de détérioration interne sont réalisées par une concentration ponctuelle du faisceau laser (3) dans l'intérieur du matériau du substrat à l'emplacement de la zone respective, de préférence par une concentration ponctuelle répétée à différentes profondeurs de substrat à l'emplacement de la zone respective,
et/ou
**en ce qu'**au moins certaines des zones (5-1, 5-2, ..., 6-1, 6-2, ..., 11-1, 11-2, ...) de détérioration interne sont réalisées par le fait que, dans le matériau du substrat, le long d'un segment (3c) d'une ligne focale de faisceau laser (3b) étendu vu dans la direction de rayonnement du faisceau laser (3), une absorption induite est réalisée, par laquelle une formation de fissure induite survient dans le matériau du substrat le long de ce segment (3c) étendu.

8. Procédé selon l'une des revendications 3 ou 4,
**caractérisé en ce que**,
dans l'étape de définition de fissure (b), une ligne de fissure en V (6V) est réalisée par le fait que, le long de deux segments de ligne de fissure (6a, 6b) pénétrant dans le contour (1) à séparer en partant du même emplacement sur la ligne de contour (5) et en s'éloignant de la ligne de contour (5) en formant le même angle α > 0°, mais cependant dans des directions opposées vues le long de la ligne de contour (5), respectivement une multiplicité de zones (6-1, 6-2, ...) individuelles de détérioration interne est réalisée dans le matériau du substrat,
dans lequel de telles lignes de fissure en V (6V-1, 6V2, ...) espacées les unes des autres de préférence vu le long de la ligne de contour (5) sont réalisées, en particulier sont réalisées sur toute la longueur de la ligne de contour (5) fermée d'un contour intérieur (1) à extraire,
et/ou
l'angle α est de préférence compris entre 20° et 40°, de préférence est égal à 30°.

9. Procédé selon la revendication 4,
**caractérisé en ce que**,
dans l'étape de décharge de tension (d), une spirale de décharge (11S) est réalisée par le fait que, le long d'un segment de ligne de décharge (11) s'approchant en forme de spirale de la ligne de contour (5) fermée d'un contour intérieur (1) à extraire, vu à partir du centre du contour (1) à extraire vers le bord extérieur de ce contour intérieur (1), une multiplicité de zones (11-1, 11-2, ...) individuelles de détérioration interne est réalisée.

10. Procédé selon l'une des revendications 3 ou 4,
**caractérisé en ce que**,
dans l'étape de définition de contour (a), dans l'étape de définition de fissure (b) et/ou dans l'étape de décharge de tension (d), des faisceaux laser (3) ayant des propriétés de faisceau identiques sont guidés au-dessus du substrat (2) et/ou **en ce que** ces faisceaux laser (3) sont produits par le même laser (12) et sont émis sur le substrat (2) au moyen de la même optique de formation de faisceau (20),
et/ou
**en ce que** la longueur d'ondes λ d'un laser (12) produisant au moins un de ces faisceaux laser (3) est choisie de telle sorte que le matériau du substrat est transparent ou est essentiellement transparent pour cette longueur d'ondes, ce dernier point signifiant que la diminution d'intensité du faisceau laser dans le matériau du substrat survenant le long de la direction du faisceau par millimètre de profondeur de pénétration est égale ou inférieure à 10%, dans lequel, par exemple pour un élément en verre ou en cristal en tant que substrat transparent dans la plage de longueurs d'ondes visible, on utilise de préférence un laser Nd:YAG (12) d'une longueur d'ondes λ de 1 064 nm ou un laser Y:YAG de 1 030 nm pour la production d'au moins un de ces faisceaux laser (3),
et/ou
**en ce que**, lors de l'impact sur la surface du substrat (2) recevant le faisceau, le diamètre moyen δ d'au moins un de ces faisceaux laser (3), donc le diamètre de spot δ, est compris entre 0,5 µm et 5 µm, de préférence entre 1 µm et 3 µm, de préférence est égal à 2 µm,
et/ou
**en ce que** la durée d'impulsion τ d'un laser (12) produisant au moins un de ces faisceaux laser (3) est choisie de telle sorte que, à l'intérieur du temps d'interaction avec le matériau du substrat, la diffusion de chaleur dans le matériau du substrat est négligeable, de préférence est inexistante et, pour cela, τ, δ et la constante de diffusion de chaleur β du matériau du substrat sont réglés selon τ << δ2/β et/ou de préférence τ est choisi inférieur à 10 ns, de préférence inférieur à 100 ps,
et/ou
**en ce que** la fréquence de répétition d'impulsions d'un laser (12) produisant au moins un de ces faisceaux laser (3) est comprise entre 10 kHz et 1 000 kHz, est de préférence égale à 100 kHz,
et/ou
**en ce que** un laser (12) produisant au moins un de ces faisceaux laser (3) est mis en œuvre en tant que laser à impulsions uniques ou en tant que laser à impulsions en salves,
et/ou
**en ce que** la puissance laser moyenne, mesurée directement côté sortie de faisceau d'un laser (12) produisant au moins un de ces faisceaux laser (3) est comprise entre 10 watts et 100 watts, de préférence entre 30 watts et 50 watts.

11. Procédé selon l'une des revendications précédentes,
**caractérisé en ce que**,
dans l'étape d'enlèvement de matériau, par exemple pour un élément en verre ou en cristal en tant que substrat (2) transparent dans la plage de longueurs d'ondes visible, on utilise un laser Nd:YAG (14) d'une longueur d'ondes λ de 1 064 nm ou
un laser Y:YAG (14) d'une longueur d'ondes λ de 1 030 nm pour la production du faisceau laser (7) enleveur de matériau,
et/ou
**en ce que**, lors de l'impact sur la surface du substrat (2) recevant le faisceau, le diamètre moyen du faisceau laser (7) enleveur de matériau, donc son diamètre de spot, est compris entre 5 µm et 200 µm, de préférence entre 10 µm et 100 µm,
et/ou
**en ce que** la fréquence de répétition d'impulsions du laser (14) produisant le faisceau laser (7) enleveur de matériau est comprise entre 0,1 kHz et 200 kHz, de préférence entre 0,2 kHz et 100 kHz,
et/ou
**en ce que** le laser (14) produisant le faisceau laser (7) enleveur de matériau est mis en œuvre en tant que laser à impulsions uniques ou en tant que laser à impulsions en salves,
et/ou
**en ce que** la puissance laser moyenne, mesurée directement côté sortie de faisceau du laser (14) produisant le faisceau laser (7) enleveur de matériau, est comprise entre 10 watts et 200 watts, de préférence entre 20 watts et 100 watts.

12. Procédé selon l'une des revendications précédentes,
**caractérisé en ce que**
l'étape d'enlèvement de matériau est réalisée comme suit :
la longueur d'ondes du faisceau laser (7) enleveur de matériau est choisie de telle sorte que le matériau du substrat est transparent ou essentiellement transparent pour celle-ci,
le faisceau laser (7) enleveur de matériau est, à travers le substrat (2), concentré dans un point focal (15) situé sur le côté arrière de substrat (4r) éloigné de la surface de substrat côté incidence du faisceau (côté avant de substrat 4v), et
le rayonnement laser (7) enleveur de matériau est, avec un déplacement successif du point focal (15) à partir du côté arrière de substrat (4r) vers le côté avant de substrat (4v), guidé plusieurs fois le long de la ligne d'enlèvement (9) pour enlever le matériau du substrat sur toute l'épaisseur de substrat (10).

13. Procédé selon la revendication précédente,
**caractérisé en ce que**
ce qui suit est réalisé avant le début de l'étape d'enlèvement de matériau :
d'abord, le substrat (2) est supporté au moyen d'un palier (16) de telle sorte que, dans la zone du contour (1) à séparer, entre le côté arrière de substrat (4r) et le palier (16), il est constitué une cavité (17) étanche aux gaz et, ensuite, un matériau de précipitation (18), qui a été positionné avant la mise sur palier du substrat (2) de telle sorte qu'il se trouve dans la cavité (17) après la mise sur palier du substrat (2), est vaporisé par le fait qu'un faisceau laser (3, 7) est concentré dans la cavité (17) et en outre de préférence également sur le matériau de précipitation (18).

14. Procédé selon l'une des revendications précédentes,
**caractérisé en ce que**
le contour (1) est réalisé dans un élément en verre plan, en particulier dans une vitre en verre trempé ou en verre non trempé, ou dans un élément en cristal plan en tant que substrat (2), et est séparé de celui-ci.

15. Dispositif pour réaliser un contour (1) dans un substrat (2) plan et pour séparer le contour (1) du substrat (2), en particulier pour réaliser un contour intérieur (1) dans un substrat (2) plan et pour extraire le contour intérieur (1) du substrat (2) avec une unité de commande (22) centrale et
un dispositif de production de faisceau et de formation de faisceau (19) dont la production de faisceau, la concentration de faisceau et la déviation de faisceau sont commandées au moyen de l'unité de commande (22) centrale de telle sorte que,
dans une étape de définition de contour (a), au moyen d'un faisceau laser (3) guidé au-dessus du substrat (2) le long d'une ligne de contour (5) caractérisant le contour (1) à réaliser, une multiplicité de zones (5-1, 5-2, ...) de détérioration interne est réalisée dans le matériau du substrat et
que, dans une étape d'enlèvement de matériau et optionnellement en plus de déformation de matériau (c) effectuée après l'étape de définition de contour (a), au moyen d'un faisceau laser guidé au-dessus du substrat (2) et optionnellement émis à titre supplémentaire sur le substrat (2), du matériau du substrat est arraché du substrat (2) par enlèvement de matériau et optionnellement à titre supplémentaire par déformation plastique, et/ou du matériau du substrat est détaché du substrat (2),
**caractérisé en ce que**
la production de faisceau, la concentration de faisceau et la déviation de faisceau du dispositif de production de faisceau et de formation de faisceau (19) sont commandées au moyen de l'unité de commande (22) centrale de telle sorte que
l'étape d'enlèvement de matériau et optionnellement en plus de déformation de matériau (c) effectuée après l'étape de définition de contour (a) est ou comprend une étape d'enlèvement de matériau dans laquelle, au moyen d'un faisceau laser (7) enleveur de matériau guidé au-dessus du substrat (2) le long d'une ligne d'enlèvement (9), placée le long de la ligne de contour (5) mais à distance (8) de celle-ci ainsi que dans le contour (1) à séparer, le matériau du substrat est enlevé sur toute l'épaisseur de substrat (10).

16. Dispositif selon la revendication précédente,
**caractérisé en ce que**
le dispositif de production de faisceau et de formation de faisceau (19) comprend :
un premier laser (12) produisant le faisceau laser (3) à guider dans l'étape de définition de contour (a) et optionnellement à titre supplémentaire dans une étape de définition de fissure (b) et optionnellement à titre supplémentaire dans une étape de décharge de tension (d), un deuxième laser (14) produisant le faisceau laser à guider dans l'étape d'enlèvement de matériau et optionnellement en plus de déformation de matériau (c) et, optionnellement à titre supplémentaire, à émettre, en particulier le laser (14) produisant le faisceau laser (7) à guider dans l'étape d'enlèvement de matériau,
une première unité optique (20) guidant le faisceau, avec laquelle le faisceau laser (3) produit avec le premier laser (12) dans l'étape de définition de contour (a), dans l'étape de définition de fissure (b) et/ou dans l'étape de décharge de tension (d) peut être guidé au-dessus du substrat (2), et une deuxième unité optique (21) guidant le faisceau, avec laquelle le faisceau laser produit avec le deuxième laser (14) dans l'étape d'enlèvement de matériau et optionnellement en plus de déformation de matériau (c), en particulier le faisceau laser (7) enleveur de matériau, peut être guidé au-dessus du substrat (2) et peut optionnellement être émis sur le substrat (2) à titre supplémentaire.

17. Dispositif selon la revendication précédant la précédente dans le cas de la forme d'exécution du dispositif pour la réalisation d'un procédé selon la revendication 1,
**caractérisé en ce que**
le dispositif de production de faisceau et de formation de faisceau (19) comprend :
d'une part un faisceau laser (3) à guider dans l'étape de définition de contour (a) et optionnellement en plus dans une étape de définition de fissure (b) et optionnellement en plus dans une étape de décharge de tension (d), et d'autre part également le laser à guider dans l'étape d'enlèvement de matériau et produisant le faisceau laser (7) enleveur de matériau,
une première unité optique (20) guidant le faisceau, avec laquelle le faisceau laser (3) produit avec ce laser dans l'étape de définition de contour (a), dans l'étape de définition de fissure (b) et/ou dans l'étape de décharge de tension (d) peut être guidé au-dessus du substrat (2), et une deuxième unité optique (21) guidant le faisceau avec laquelle, dans l'étape d'enlèvement de matériau, le faisceau laser (7) enleveur de matériau produit avec ce laser peut être guidé au-dessus du substrat (2).
